# EUROPÄISCHE PATENTSCHRIFT

(11) **EP 3 382 445 B1**
(45) Veröffentlichungstag und Bekanntmachung des Hinweises auf die Patenterteilung: **27.05.2020**
(21) Anmeldenummer: 17163142.7
(22) Anmeldetag: 27.03.2017
(51) Int. Cl.: G02C 13/00, G06K 7/10, G02C 7/02

(54) **VERBESSERTE VORRICHTUNG ZUM SICHTBARMACHEN EINES SIGNIERZEICHENS EINES BRILLENGLASES UND VERFAHREN**
IMPROVED DEVICE FOR THE VISUALISATION OF A SIGNATURE OF AN EYEGLASS LENS, AND METHOD
DISPOSITIF AMÉLIORÉ DE VISUALISATION D'UN CARACTÈRE DE SIGNATURE D'UN VERRE DE LUNETTE ET PROCÉDÉ

(43) Veröffentlichungstag der Anmeldung: 03.10.2018
(73) Patentinhaber: Carl Zeiss Vision International GmbH, 73430 Aalen (DE)
(72) Erfinder: Amberg, Martin, 73434 Aalen (DE); Schön, Roland, 73431 Aalen (DE)
(74) Vertreter: Witte, Weller & Partner Patentanwälte mbB

(56) Entgegenhaltungen:
- EP-A1- 3 128 362
- US-A1- 2015 300 912
- US-A1- 2015 330 865
- US-A1- 2016 116 762

## Beschreibung

Die Erfindung wird in den Ansprüchen definiert. Sie betrifft eine Vorrichtung zum Sichtbarmachen eines Signierzeichens eines Brillenglases, mit einer auf einer ersten Seite des Brillenglases angeordneten Beleuchtungsvorrichtung zum Erzeugen eines Beleuchtungs-Lichtstrahlenbündels, für eine Erkennung des Signierzeichens; und einem auf der der ersten Seite gegenüberliegenden zweiten Seite des Brillenglases angeordneten, als Retroreflektor ausgebildeten Reflektor; wobei die Vorrichtung eine auf der ersten Seite des Brillenglases angeordnete und zum Empfangen eines von dem Brillenglas kommenden Beobachtungs-Lichtstrahlenbündels angeordnete Kamera aufweist.

Die Erfindung betrifft ferner ein Verfahren zum Sichtbarmachen eines Signierzeichens eines Brillenglases, bei dem ein Beleuchtungs-Lichtstrahlenbündel auf das Brillenglas gerichtet wird, das auf das Brillenglas trifft, nach dem Auftreffen auf das Brillenglas an einem als Retroreflektor ausgebildeten Reflektor reflektiert wird, als Beobachtungs-Lichtstrahlenbündel erneut auf das Brillenglas trifft, und schließlich auf eine Visualisierungsvorrichtung trifft, dadurch gekennzeichnet, dass die Visualisierungsvorrichtung zum Empfangen und visuellen Darstellen des von dem Brillenglas kommenden Beobachtungs-Lichtstrahlenbündels angepasst ist.

Brillengläser, insbesondere sog. Gleitsichtgläser, werden mit Signierzeichen, insbesondere Permanentgravuren, vorzugsweise gemäß DIN EN ISO 8980-2, Abschnitt 7.1, versehen, deren Lage während der Produktion des Brillenglases erfasst und verarbeitet wird, um das Brillenglas lagerichtig zu spannen, zu bearbeiten, zu stempeln und schließlich in die Brille des Endabnehmers zu bringen. Signierzeichen werden auf Brillengläsern dauerhaft angebracht und zwar durch Diamantritzverfahren, durch Abformen beim Gießen von Kunststoff -Brillengläsern oder durch Lasersignierung. Daneben umfasst der Begriff "Signierzeichen" im Rahmen der vorliegenden Erfindung auch andere Unregelmäßigkeiten des Brillenglases, z.B. Schlieren im Glasmaterial oder Kunststoff.

Damit der Brillenträger durch die Signierzeichen bei der Benutzung der Brille nicht gestört wird, sind diese Zeichen so gestaltet, dass sie nur bei sehr speziellen Lichtverhältnissen erkennbar sind. Die Erkennung der Lage eines Signierzeichens auf einem Brillenglas während des Produktionsprozesses ist deshalb schwierig. Erschwerend kommt dabei hinzu, dass die im Produktionsprozess befindlichen Brillengläser in Folge der speziellen Anforderungen der späteren Brillenträger sehr unterschiedliche optische Wirkungen haben. Innerhalb der Produktion folgen daher Brillengläser mit diesen unterschiedlichen optischen Wirkungen dicht aufeinander, die also in rascher Folge beim aufeinanderfolgenden Bearbeiten einzelner Brillengläser beachtet werden müssen.

Für eine Kontrolle von Gleitsichtgläsern im Fern- und Nahbezugspunkt ist es erforderlich, in Abhängigkeit von den aufgebrachten Signierzeichen die Wirkung der Gleitsichtgläser an festgelegten Koordinaten auf dem Brillenglas zu messen. Für eine manuelle oder für eine automatische Messung müssen die Signierzeichen daher sichtbar gemacht und die darin enthaltenen Informationen ausgelesen werden.

Die Informationen in einem Glas können beispielsweise in Form eines Data-Matrix-Codes vorliegen. Der Data-Matrix-Code kann beispielsweise eine Größe von 2 mm auf 2 mm aufweisen und ist dabei aus 16 x 16 Punkten aufgebaut. Der Data-Matrix-Code kann dabei in Form einer Permanentgravur, wie es in der Norm DIN EN ISO 8980-2, Abschnitt 7.1 für Gleitsichtgläser gefordert ist, ausgeführt werden. Ein solcher Data-Matrix-Code kann zum Beispiel durch Mikrogravieren mit einem Laser oder mechanisches Bearbeiten, z.B. mit einem Stichel, auf das Brillenglas aufgebracht werden. Der Code kann dabei entweder in das Substratmaterial eingeschrieben, auf das Substratmaterial des Brillenglases oder auf eine evtl. vorhandene Beschichtung insbesondere einen Hartlack oder eine Antireflexbeschichtung aufgebracht werden. Für das unbewaffnete Auge kann eine solche Gravur ggf. nur schwer zu erkennen sein.

Bei bekannten Verfahren und Vorrichtungen erfolgt die Sichtbarmachung des Signierzeichens beispielsweise mittels rhombenförmiger Gitter oder Streifenmustern, die unscharf abgebildet werden und deren Kantenübergänge hell/dunkel das Signierzeichen erkennbar machen.

Die EP 2 597 451 A2 betrifft ein Verfahren und eine Vorrichtung zum Sichtbarmachen eines Signierzeichens auf einem Brillenglas. Ein Beleuchtungs-Lichtstrahlenbündel wird auf das Brillenglas mit dem Signierzeichen gerichtet. Das Beleuchtungs-Lichtstrahlenbündel trifft auf das Brillenglas, nach dem Auftreffen auf das Brillenglas wird dieser an einem Reflektor reflektiert, trifft erneut das Brillenglas und wird schließlich als Beobachtungs-Lichtstrahlenbündel einer Kamera zugeleitet.

Ein entsprechendes Verfahren und eine Vorrichtung zum Sichtbarmachen eines Signierzeichens auf einem Brillenglas wird in der DE 10 2011 089 704 A1 offenbart. Eine weitere Vorrichtung zum Sichtbarmachen eines Signierzeichens auf einem Brillenglas zeigt die DE 103 33 426 B4.

Beide vorstehend genannten Vorrichtungen haben den Nachteil, dass sie aufgrund der fest verbauten Kamera und dem damit verbundenen stationären Computer, bspw. einen Desktop-Rechner oder Laptop, aufgrund der Größe lediglich unflexibel bzw. stationär eingesetzt werden können. Dies wirkt sich nachteilig auf die Einsatzmöglichkeiten aus. So ist eine Anwendung im Augenoptiker-Laden zur Demonstration vor dem Kunden nur eingeschränkt möglich. Vor allem in größeren Läden muss der aktuelle Verkaufsort verlassen werden, um mit dem Kunden zu der fest installierten Vorrichtung zum Sichtbarmachen eines Signierzeichens eines Brillenglases zu gehen.

Die US 2016/0116762 A1 offenbart ein Verfahren zum Speichern von Informationen auf einem Brillenglas, Linsenrohling für ein Brillenglas oder Brillenglas-Halbfertigprodukt. Die US 2015/0300912 A1 offenbart ein Verfahren zum Überprüfen der Konformität einer optischen Eigenschaft eines Brillenglases und eine entsprechende Vorrichtung. Die EP 3 128 362 A1 offenbart ein Verfahren zum Bestimmen eines Parameters eines optischen Geräts. Die US 2015/0330865 A1 beschreibt ein Handgerät zum Messen der Oberflächenleistung oder des Radius von verschreibungspflichtigen Brillengläsern.

Der Erfindung liegt daher die Aufgabe zugrunde, Verfahren und Vorrichtungen der eingangs genannten Art dahingehend weiterzubilden, dass die genannten Nachteile vermieden werden. Insbesondere soll ermöglicht werden, Vorrichtungen mit geringeren Abmessungen bereitzustellen, so dass eine flexible Vorführung im Kundenbereich ermöglicht wird. Weiterhin soll dies mit Rückgriff auf bereits vorhandene Geräte ermöglicht werden und Bauteile vermieden werden, wodurch Vorrichtungen kostengünstiger bereitgestellt werden können. Ferner sollen verschleißträchtige Teile vermieden und somit Vorrichtungen bereitgestellt werden, bei denen die Wartungsintervalle im Vergleich zu herkömmlichen Vorrichtungen vergrößert werden können. Die Vorrichtung soll darüber hinaus einfach und intuitiv verwendet werden können.

Daher wird eine Vorrichtung zum Sichtbarmachen eines Signierzeichens eines Brillenglases bereitgestellt, mit
- einer Auflage für das Brillenglas, wobei die Auflage eine erste Seite und eine der der ersten Seite gegenüberliegende zweite Seite aufweist;
- einer auf der ersten Seite der Auflage für das Brillenglas angeordneten Beleuchtungsvorrichtung zum Leiten eines Beleuchtungs-Lichtstrahlenbündels auf das auf der Auflage angeordnete Brillenglas, für eine Erkennung des Signierzeichens; und
- einem auf der zweiten Seite der Auflage angeordneten, als Retroreflektor ausgebildeten Reflektor;
wobei die Vorrichtung eine auf der ersten Seite der Auflage für das Brillenglas angeordnete und zum Empfangen und visuellen Darstellen eines von dem Brillenglas kommenden Beobachtungs-Lichtstrahlenbündels ausgebildete Visualisierungsvorrichtung aufweist.

Die Visualierungsvorrichtung ist ein mobiles Gerät mit einer Bildaufnahmeeinrichtung und einer Bildanzeigeeinrichtung. Die Beleuchtungsvorrichtung ist dazu ausgebildet, das von einer externen Lichtquelle kommende Beleuchtungs-Lichtstrahlenbündel auf das auf der Auflage angeordnete Brillenglas zu führen. Die Visualisierungsvorrichtung ist lösbar in einer Halterung angeordnet. Die Bildanzeigeeinrichtung ist ein Smartphone oder ein Tablet. Die Vorrichtung weist eine Kabelverbindung mit dem mobilen Gerät auf, um die Vorrichtung mit elektrischer Spannung von dem mobilen Gerät zu versorgen, wobei die elektrische Spannung des mobilen Geräts für ein Betreiben eines elektrischen Motors verwendet wird, um eine Bewegung des als Retroreflektor ausgebildeten Reflektors zu ermöglichen. Eine Frequenz einer periodischen Bewegung des als Retroreflektor ausgebildeten Reflektors wird an ein Synchronisiersignal der Visualisierungsvorrichtung angepasst.

Des Weiteren wird eine Vorrichtung zum Sichtbarmachen eines Signierzeichens eines Brillenglases bereitgestellt, mit
- einer Auflage für das Brillenglas, wobei die Auflage eine erste Seite und eine der der ersten Seite gegenüberliegende zweite Seite aufweist;
- einer auf der ersten Seite der Auflage für das Brillenglas angeordneten Beleuchtungsvorrichtung zum Leiten eines Beleuchtungs-Lichtstrahlenbündels auf das auf der Auflage angeordnete Brillenglas, für eine Erkennung des Signierzeichens; und
- einem auf der zweiten Seite der Auflage für das Brillenglas angeordneten, als Retroreflektor ausgebildeten Reflektor;
wobei die Vorrichtung eine auf der ersten Seite der Auflage für das Brillenglas angeordnete Halterung zur lösbaren Aufnahme eines mobilen Geräts mit einer Bildaufnahmeeinrichtung und einer Bildanzeigeeinrichtung aufweist. Die Bildanzeigeeinrichtung ist ein Smartphone oder ein Tablet.

Eine Lichtquelle des mobilen Geräts ist als Beleuchtungs-Lichtstrahlenbündel mit der Vorrichtung gekoppelt. Die Vorrichtung weist eine Kabelverbindung mit dem mobilen Gerät auf, um die Vorrichtung mit elektrischer Spannung von dem mobilen Gerät zu versorgen, wobei die elektrische Spannung des mobilen Geräts für ein Betreiben eines elektrischen Motors verwendet wird, um eine Bewegung des als Retroreflektor ausgebildeten Reflektors zu ermöglichen. Eine Frequenz einer periodischen Bewegung des als Retroreflektor ausgebildeten Reflektors wird an ein Synchronisiersignal der Visualisierungsvorrichtung angepasst.

Des Weiteren wird ein Verfahren zum Sichtbarmachen eines Signierzeichens eines Brillenglases bereitgestellt, mit den folgenden Schritten:
- Lenken eines Beleuchtungs-Lichtstrahlenbündels durch das Brillenglas, wobei Sonnenlicht oder Licht einer Lichtquelle eines mobilen Geräts als Beleuchtungs-Lichtstrahlenbündels in die erfindungsgemäße Vorrichtung eingekoppelt wird;
- Reflektieren des Beleuchtungs-Lichtstrahlenbündels als Beobachtungs-Lichtstrahlenbündel an einem als Retroreflektor ausgebildeten Reflektor;
- Lenken des Beobachtungs-Lichtstrahlenbündels durch das Brillenglas;
- Lenken des durch das Brillenglas hindurchdurchgetretenen Beobachtungs- Lichtstrahlenbündels auf eine Visualisierungsvorrichtung; und
- Empfangen und visuelles Darstellen des von dem Brillenglas kommenden Beobachtungs-Lichtstrahlenbündels durch die Visualisierungsvorrichtung. Die Vorrichtung weist eine Kabelverbindung mit dem mobilen Gerät auf, um die Vorrichtung mit elektrischer Spannung von dem mobilen Gerät zu versorgen, wobei die elektrische Spannung des mobilen Geräts für ein Betreiben eines elektrischen Motors verwendet wird, um eine Bewegung des als Retroreflektor ausgebildeten Reflektors zu ermöglichen. Eine Frequenz einer periodischen Bewegung des als Retroreflektor ausgebildeten Reflektors wird an ein Synchronisiersignal der Visualisierungsvorrichtung angepasst.
Vorzugsweise wird bei dem erfindungsgemäßen Verfahren ein Beleuchtungs-Lichtstrahlenbündel auf das Brillenglas gerichtet, das auf die erste Seite des Brillenglases trifft, durch das Brillenglas hindurchtritt, nach dem Verlassen des Brillenglases an der zweiten Seite des Brillenglases an einem als Retroreflektor ausgebildeten Reflektor reflektiert wird, als Beobachtungs-Lichtstrahlenbündel auf die zweite Seite des Brillenglases trifft, erneut durch das Brillenglas hindurchtritt und nach dem Verlassen des Brillenglases an dessen erster Seite schließlich auf die Visualisierungsvorrichtung trifft.

Die Erfindung betrifft darüber hinaus ein computerimplementiertes Verfahren zur Steuerung der Vorrichtung zum Sichtbarmachen eines Signierzeichens eines Brillenglases. Das Verfahren weist die Schritte des Empfangens des von dem Brillenglas kommenden Beobachtungs-Lichtstrahlenbündels mit der Bildaufnahmeeinrichtung eines mobilen Geräts und des visuellen Darstellens des Signierzeichens mit der Bildanzeigeeinrichtung des mobilen Geräts auf.

Ferner betrifft die Erfindung die Verwendung eines mobilen Geräts mit einer Bildaufnahmeeinrichtung und Bildanzeigeeinrichtung, insbesondere eines Smartphones oder eines Tablets, oder einer Mattscheibe zur Erfassung, visuellen Darstellung und/oder Auswertung eines Beobachtungs-Lichtstrahlenbündels einer Vorrichtung zum Sichtbarmachen eines Signierzeichens eines Brillenglases. Das mobile Gerät ist lösbar in einer Halterung angeordnet. Das mobile Gerät ist ein Smartphone oder ein Tablet.

Eine Seite eines Brillenglases beschreibt eine optisch wirksame Fläche eines Brillenglases.

Die hierin vorgeschlagene Visualisierungsvorrichtung ermöglicht das Empfangen des Beobachtungs-Lichtstrahlenbündels und dessen visuelles Darstellen. "Visuelles Darstellen" wie hierein verwendet bedeutet Sichtbarmachen des Signierzeichens auf eine Art, die es dem menschlichen Auge ermöglicht, das Signierzeichen unmittelbar zu erkennen und, sofern das Signierzeichen bspw. unter Verwendung eines herkömmlichen Zeichensatzes formuliert ist, der Betrachter die darin enthaltenen Informationen unmittelbar einsehen und erfassen kann. Mit anderen Worten betrifft das visuelle Darstellen, dass der Betrachter mit bloßem bzw. unbewaffnetem Auge das Signierzeichen unmittelbar erkennen kann.

Empfangen des Beobachtungs-Lichtstrahlenbündels und dessen visuelles Darstellen erfolgen vorzugsweise gleichzeitig. Alternativ kann das visuelle Darstellen zeitverzögert gegenüber dem Empfangen des Beobachtungs-Lichtstrahlenbündels erfolgen. Letzteres kann insbesondere bei der Verwendung eines mobilen Geräts als Visualisierungsvorrichtung der Fall sein.

Die erfindungsgemäße Visualisierungsvorrichtung unterscheidet sich daher von den im Stand der Technik vorgeschlagenen Lösungen, bei denen die Vorrichtung lediglich eine Kamera aufweist, die mittels eines Kabels mit einem Computer, beispielsweise Desktop-Computer oder Laptop, verbunden ist. Auf diesem Rechner läuft eine entsprechende Software, mit der das Kamerabild und das Ergebnis eines decodierten Data-Matrix-Codes angezeigt werden.

Die erfindungsgemäße Visualisierungsvorrichtung ermöglicht daher nicht nur das Empfangen des Beobachtungs-Lichtstrahls wie bei einer gewöhnlichen Kamera, sondern auch gleichzeitiges visuelles Darstellen des Signierzeichens, so dass der Betrachter dieses mit bloßem bzw. unbewaffnetem Auge erkennen kann.

Das Signierzeichen der eingangs genannten Art kann sowohl auf als auch in dem Brillenglas vorliegen. Bei dem Signierzeichen handelt es sich vorzugsweise um einen Barcode, beispielsweise einen eindimensionalen, zweidimensionalen oder dreidimensionalen Barcode. Der dreidimensionale Barcode kann hierbei räumlich dreidimensional aufgebaut vorliegen, z.B. in Form eines Hologramms, oder als zweidimensionaler Barcode, bei dem durch farbige Pixel entsprechende Zusatzinformationen eingebracht werden. Das Signierzeichen, bspw. der Data-Matrix-Code, kann in Form einer Permanentgravur in das Brillenglas eingebracht oder auf das Brillenglas aufgebracht sein. Dies kann mit einem Laser erfolgen. Das Signierzeichen weist im Vergleich zu dem Brillenglas geringe Abmessungen von bspw. 5 mm auf 5 mm oder weniger auf. Mehr bevorzugt sind Abmessungen von 4 mm auf 4 mm oder weniger, 3 mm auf 3 mm oder weniger oder 2 mm auf 2 mm oder weniger. Es ist klar, dass das Signierzeichen nicht notwendigerweise quadratisch sein muss, sondern jegliche andere Form aufweisen kann, wie bspw. rund, rechteckig oder dreieckig. Eine Trapezform bietet den Vorteil, dass bei Klartextdarstellung der Information die Leserichtung ohne weiteres bestimmt werden kann und so ggf. eine andere Ausrichtung des Brillenglases bzgl. der Vorrichtung vermieden werden kann.

Vorzugsweise handelt es sich bei dem Signierzeichen um einen Data-Matrix-Code. Mehr bevorzugt ist der Data-Matrix-Code gemäß der Norm DIN EN ISO 8980-2, Abschnitt 7.1 für Gleitsichtgläser ausgeführt, nämlich als dauerhafte Kennzeichnung die mindestens mit den folgenden Angaben dauerhaft gekennzeichnet ist:
a) Markierung zur Ausrichtung; diese muss mindestens aus zwei Markierungen in einem Abstand von 34 mm bestehen und symmetrisch zu einer vertikalen Ebene durch den Anpasspunkt oder den Prismenbezugspunkt angeordnet sein;
b) Angabe der Nahzusatzwirkung, in Dioptrien;
c) Angabe des Herstellers oder Lieferanten oder des Handelsnamens oder Warenzeichens.
Der Data-Matrix-Code kann des Weiteren eine Größe von 2 mm auf 2 mm aufweisen und ist dabei für gewöhnlich aus 16 x 16 Punkten aufgebaut.

Wenn im Rahmen der vorliegenden Anmeldung von einem "Brillenglas" bzw. "Brillengläsern" die Rede ist, so kann darunter ein Brillenglas gemäß DIN EN ISO 13666:2013-10, Abschnitt 8.1.2 verstanden werden, nämlich ein Augenglas, das vor dem Auge, aber nicht in Kontakt mit dem Auge getragen wird, wobei ein Augenglas eine Linse ist, die zur Messung und/oder Korrektion von Fehlsichtigkeiten und/oder zum Schutz des Auges oder zur Änderung seines Aussehens dienen soll. Vorzugsweise handelt es sich bei einem "Brillenglas" um ein Gleitsicht-Brillenglas gemäß DIN EN ISO 13666:2013-10, Abschnitt 8.3.5, nämlich ein Brillenglas mit mindestens einer Gleitsichtfläche und einer zunehmenden Wirkung bzw. zunehmenden positiven Wirkung, wenn der Brillenträger nach unten blickt.

Ein "Retroreflektor" der eingangs genannten Art betrifft eine Fläche, die einfallendes Licht über einen großen Bereich von Einfallswinkeln im Wesentlichen wieder in dieselbe Richtung zurückwirft, aus der es einfällt. In der Praxis werden hierfür ebene oder gekrümmte Flächen verwendet, die mit einer retroreflektierenden Oberfläche, beispielsweise Glasperlen, versehen sind, oder auf der viele kleine Triplespiegel oder verspiegelte Tripleprismen in einer regelmäßigen Anordnung angebracht sind. Derartige Oberflächen sind allgemein von Fahrzeug-Rückreflektoren, Verkehrsschildern, Lichtschranken usw. bekannt. Für das erfindungsgemäße Verfahren ist es vorteilhaft, wenn die einzelnen retroreflektierenden Strukturen auf dem Retroreflektor deutlich kleiner als 1 mm, beispielsweise 100 µm oder kleiner, vorzugsweise kleiner als 80 µm, kleiner als 50 µm, sind.

Der Reflektor wird periodisch bewegt, insbesondere rotierend. Diese Bewegungen des Reflektors verlaufen im Wesentlichen quer zur Ausbreitungsrichtung des Beleuchtungs-Lichtstrahlenbündels. Die Frequenz dieser periodischen Bewegung des Reflektors wird an ein Synchronisiersignal der Visualisierungsvorrichtung angepasst, beispielsweise wird die Frequenz mit dem Synchronisierungssignal drehzahlsynchronisiert, insbesondere phasensynchronisiert bereitgestellt. Hierdurch wird die Auswertung der aus dem Beobachtungs-Lichtstrahlenbündel abgeleiteten visuellen Darstellung vereinfacht.

Um ein Beobachtungs-Lichtstrahlenbündel hoher und gleichbleibender Qualität zu erhalten, d.h. ein Beobachtungs-Lichtstrahlenbündel bei dem eventuell vorhandene Oberflächenunregelmäßigkeiten oder Verunreinigungen der hierzu verwendeten Bauteile nicht oder nur geringfügig zur Geltung kommen, wird der Reflektor rotierend bewegt. Ein ähnlicher Effekt kann durch Einbringen eines rotierenden keilförmigen, transparenten Elements in den Strahlengang zwischen dem Reflektor und der Auflage erzielt werden. Alternativ kann der Abstand zwischen der Visualisierungsvorrichtung und dem Brillenglas und/oder der Abstand zwischen dem als Retroreflektor ausgebildeten Reflektor und der Auflage bzw. dem darauf vorliegenden Brillenglas geändert werden. Verschiedene Kombinationen der vorstehend genannten Möglichkeiten sind möglich.

Ferner kann eine Mess-Lichtquelle zum Erzeugen eines Mess-Lichtstrahls für eine Messung einer physikalischen Eigenschaft des Brillenglases zum Einsatz gelangen. Geeignete optische Mittel werden verwendet, um den Mess-Lichtstrahl von der Mess-Lichtquelle zum Brillenglas und vom Brillenglas zu einem Sensor zu führen. Der Sensor dient zum Messen physikalischer Eigenschaften des Brillenglases.

Die verschiedenen Strahlengänge werden vorzugsweise ganz oder streckenweise zusammengelegt, um das Verfahren auf möglichst kleinem Raum durchführen bzw. die Vorrichtung zu verkleinern. So kann das Beleuchtungs-Lichtstrahlenbündel in den Strahlengang des Beobachtungs-Lichtstrahlenbündels eingekoppelt werden. Alternativ kann ein Mess-Lichtstrahl in den Strahlengang des Beobachtungs-Lichtstrahlenbündels oder der Mess-Lichtstrahl in den Strahlengang des Beleuchtungs-Lichtstrahlenbündels eingekoppelt werden. Dies geschieht bei Ausführungsformen der erfindungsgemäßen Vorrichtung vorzugsweise durch entsprechende Strahlenteiler oder sonstige geeignete optische Mittel, beispielsweise durchbohrte Spiegel.

Im Zusammenhang mit den verwendeten Strahlteilern ist es bevorzugt, eine Lichtfalle für einen durch den Strahlteiler hindurchtretenden Anteil des jeweiligen Lichtstrahls vorzusehen.

Jegliche Art von Beleuchtungsrichtung kann verwendet werden. Jegliche Arten von Lichtquellen oder Lampen können hierbei allein oder in Kombination verwendet werden. Vorzugsweise ist die verwendete Lichtquelle punktförmig oder ist mit einer hinreichend kleinen Blende versehen. Bspw. kommen eine oder mehrere LEDs, beispielsweise zwei, drei, fünf, zehn, zwanzig oder mehr LEDs zur Verwendung. Mehr bevorzugt werden organische LEDs verwendet. Alternativ kann Sonnenlicht oder Licht einer Lichtquelle eines mobilen Geräts als Beleuchtungs-Lichtstrahlenbündel in die erfindungsgemäße Vorrichtung eingekoppelt werden.

Die der Erfindung zugrunde liegende Aufgabe wird auf diese Weise vollkommen gelöst.

Die Visualisierungsvorrichtung ist ein mobiles Gerät mit einer Bildaufnahmeeinrichtung und einer Bildanzeigeeinrichtung, insbesondere ein Smartphone oder ein Tablet.

Als Smartphone oder Tablet können hierbei jegliche handelsüblichen Geräte zum Einsatz gelangen. Das Smartphone oder Tablet können beispielsweise in der Hand gehalten und vor der ersten Seite des Brillenglases, d.h. der der Lichtquelle zugewandten Seite, positioniert werden und bei eingeschalteter Aufnahmeeinrichtung bzw. Kamera und Bildfunktion kann der Abstand zu dem Brillenglas derart variiert werden, bis das Signierzeichen eindeutig zu erkennen, das heißt ausreichend aufgelöst, ist. Vorzugsweise wird eine Halterung derartig bereitgestellt, beispielsweise eine Halteschale, in der das mobile Gerät eingelegt und gegebenenfalls befestigt werden kann, so dass eine qualitativ gute Aufnahme des Signierzeichens ermöglicht wird.

Von besonderem Vorteil bei dem hierbei verwendeten mobilen Gerät ist, dass persönliche mobile Geräte der Mitarbeiter bzw. Angestellten verwendet werden können. Durch Aufspielen eines Programms bzw. der App kann dabei jedes mobile Gerät ohne Weiteres dazu angepasst werden, dass nicht nur das visuelle Darstellen des Beobachtungs-Lichtstrahles ermöglicht wird, sondern auch der entsprechende Informationsgehalt dargestellt wird. Beispielsweise kann das Signierzeichen, vorzugsweise der Data-Matrix-Code, damit einfach ausgelesen werden. Von Vorteil ist hierbei die intuitive Handhabbarkeit und Steuerbarkeit der erfindungsgemäßen Vorrichtung, die sich aus der Verwendung eines herkömmlichen mobilen Geräts in Zusammenspiel mit einem herkömmlichen Programm für mobile Geräte, d.h. einer App, ergeben.

Gemäß einer weiteren Ausführungsform ist die Visualisierungsvorrichtung lösbar in einer Halterung angeordnet. Die Halterung kann derart befestigt sein, dass eine wackelfreie Aufnahme bzw. wackelfreies visuelles Darstellen des Beobachtungs-Lichtstrahles ermöglicht ist. Hierzu wird in der gegebenenfalls einstellbaren Halterung die Beleuchtungsvorrichtung, der als Retroreflektor ausgebildete Reflektor und gegebenenfalls die Brille oder das Brillenglas befestigt. Die Halterung kann zur Aufnahme der Mattscheibe und/oder des mobilen Geräts angepasst sein, das heißt, dass die Mattscheibe und das mobile Gerät in der Halterung fixiert werden können. Die Fixierung in der Haltevorrichtung kann auf jegliche im Stand der Technik bekannte Art erfolgen und umfasst vorzugsweise eine Klippvorrichtung bzw. einen Schnappverschluss oder einen Einschub. Dadurch wird sichergestellt, dass die Visualisierungsvorrichtung einerseits bezüglich den weiteren Bestandteilen der Vorrichtung fixiert vorliegt und andererseits ohne Weiteres entfernt oder ausgetauscht werden kann. Beispielsweise können so verschiedene Mitarbeiter bzw. Angestellte ihr jeweiliges persönliches Smartphone oder Tablet in der erfindungsgemäßen Vorrichtung zum Sichtbarmachen eines Signierzeichens zum Einsatz bringen. Die Halterung weist vorzugsweise einen Handgriff auf, der die bequeme Positionierung der Visualisierungsvorrichtung in Bezug auf das Beobachtungslichtstrahlenbündel erlaubt.

Der Handgriff kann mit der Vorrichtung zum Sichtbarmachen eines Signierzeichens dergestalt verbunden sein, dass in die Halterung lediglich die gewünschte Visualisierungsvorrichtung eingefügt werden muss. Beispielsweise kann die erfindungsgemäße Vorrichtung in Form einer mobilen Vorrichtung bereitgestellt werden, die ohne Weiteres von einer Person getragen und bedient werden kann. Eine derartige mobile Vorrichtung zeichnet sich durch geringe Abmessungen, wie beispielsweise einem Volumen von 2 l oder weniger, vorzugsweise 1,5 l oder weniger, 1 l oder weniger, 0,8 l oder weniger, oder 0,5 l oder weniger aus. Eine derartige mobile Vorrichtung weist darüber hinaus ein Gewicht von 2 kg oder weniger, vorzugsweise 1,5 kg oder weniger, 1 kg oder weniger, 800 g oder weniger, oder 500 g oder weniger aus. Eine mobile Vorrichtung kann somit beispielsweise ein Volumen von 1 l und ein Gewicht von 800 g oder weniger aufweisen.

In einer derartigen mobilen Vorrichtung kann entweder ein mobiles Gerät oder eine Mattscheibe als Visualisierungsvorrichtung aufgenommen werden. Das mobile Gerät wird hierbei vorzugsweise durch den darin vorgesehenen Anschluss mit der mobilen Vorrichtung verbunden. Die Halterung kann beispielsweise in Form eines Einschubs vorgesehen sein. Beim Einschieben des mobilen Geräts wird gleichzeitig eine Steckverbindung zwischen der Vorrichtung und dem mobilen Gerät bereitgestellt. Diese Steckverbindung, bspw. eine USB-Verbindung, insbesondere eine Mini- oder Mikro-USB Verbindung, ermöglicht andererseits die Steuerung verschiedener Komponenten der mobilen Vorrichtung. Alternativ und vorzugsweise wird die Steckverbindung gleichzeitig zur Stromversorgung der mobilen Vorrichtung durch den Akkumulator des mobilen Geräts ermöglicht. Wahlweise kann in der mobilen Vorrichtung selbst ein Akkumulator mit einer Kapazität vorliegen, die lediglich die Versorgung der mobilen Vorrichtung ohne das mobile Gerät ermöglicht oder auch gleichzeitig das mobile Gerät mit Energie versorgt bzw. es auflädt. Es ist klar, dass die Stromversorgung der mobilen Vorrichtung ebenfalls über herkömmliche Energieversorgung, z.B. die Steckdose, erfolgen kann.

Aufgrund der Tatsache, dass es auf dem Markt unterschiedlich große mobile Geräte gibt, kann es ferner erforderlich sein, angepasste Adapterschalen zur Verfügung zu stellen. Die Adapterschalen können entsprechende Steckverbindungen für die Verbindung des mobilen Geräts mit der Vorrichtung aufweisen. Solche Adapterschalen können wiederum bei entsprechendem Anbringen an der erfindungsgemäßen Vorrichtung den elektrischen Kontakt zwischen dem mobilen Gerät und den anderen Bestandteilen der erfindungsgemäßen Vorrichtung bereitstellen.

Gegebenenfalls kann eine Bildaufnahmeeinrichtung eines mobilen Geräts ohne weitere unterstützende Optik nicht in der Lage sein, ein Signierzeichen entsprechend sichtbar zu machen, d.h. es für die visuelle Darstellung ausreichend aufzulösen. Insofern kann die Vorrichtung zum Sichtbarmachen eines Signierzeichens ferner ein Objektiv mit mindestens einem refraktiven, diffraktiven und/ oder reflektierenden optischen Element aufweisen. Das Objektiv ist hierbei in einem Strahlengang des Beobachtungs-Lichtstrahls angeordnet. Der Abstand zwischen dem Objektiv und dem mobilen Gerät kann manuell erfolgen oder elektrisch angesteuert sein, wodurch das Signierzeichen scharf abgebildet werden kann. Vorzugsweise erfolgt die elektrische Einsteuerung über das mobile Gerät, das als Visualisierungsvorrichtung verwendet wird. Die Einstellung des Abstands zwischen dem Objektiv und dem mobilen Gerät erfolgt in diesem Fall vorzugsweise automatisch.

Die Halterung und/oder der Handgriff können mit Betätigungselementen, wie beispielsweise einem oder mehreren Knöpfen oder einem pistolenähnlichen Abzug, versehen sein. Das Betätigungsmittel ist hierbei über beispielsweise den USB-Anschluss des mobilen Geräts derart verbunden, dass relevante Funktionen der App mittels der Betätigungselemente gesteuert werden können. Die Halterung kann gegen andere Halterungen ausgetauscht werden, die die Aufnahme eines anderen mobilen Geräts oder einer Mattscheibe ermöglichen. Bspw. kann bei der Verwendung einer Mattscheibe die Beleuchtungsvorrichtung durch ein Betätigungselement angesteuert werden. Die Halterung kann gegen andere Halterungen ausgetauscht werden, die die Aufnahme eines anderen mobilen Geräts oder einer Mattscheibe ermöglichen. Bspw. kann bei der Verwendung einer Mattscheibe die Beleuchtungsvorrichtung durch ein Betätigungselement angesteuert werden.

Im Allgemeinen findet in der Vorrichtung zum Sichtbarmachen eines Signierzeichens die Versorgung der Visualisierungsvorrichtung über den darin eingebauten Akkumulator statt. Die Stromversorgung der Beleuchtungs-LED und des Antriebs für den Retroreflektor kann beispielsweise über ein Netzteil, eine Batterie oder Akku, die Schnittstelle des Telefons oder Solarzellen erfolgen.

Gemäß einer weiteren Ausführungsform der vorliegenden Erfindung ist die Visualisierungsvorrichtung eine Mattscheibe. Die Mattscheibe bzw. Einstellscheibe ist eine aus lichtdurchlässigem Material gefertigte Scheibe und besteht für gewöhnlich aus Glas oder transparentem Kunststoff mit einer glatten und einer mattierten Seite. Durch ein Objektiv oder eine Linsenanordnung, bspw. ein oder mehrere refraktive Linsenelemente, die in dem Beobachtungslichtstrahlenbündel angeordnet sind, kann eine ausreichende Auflösung des Signierzeichen erzielt werden, so dass die visuelle Darstellung auf der dem Beobachtungslichtstrahlenbündel abgewandten Seite der Mattscheibe ermöglicht wird.

Herkömmliche mobile Geräte zeichnen sich durch eine geringe Dicke, das heißt einen geringen Abstand von einer Empfangsseite des Beobachtungs-Lichtstrahls zu der abgewandten Seite zum visuellen Darstellen vorgesehenen Seite aus. Die Dicke beträgt vorzugsweise bei einem mobilen Gerät mit einer Bildaufnahmeeinrichtung und einer Bildanzeigeeinrichtung, insbesondere ein Smartphone oder ein Tablet, 1,5 cm oder weniger, wie beispielsweise 1,2 cm oder weniger, 1 cm oder weniger, 0,9 cm oder weniger, 0,8 cm oder weniger, 0,7 cm oder weniger, 0,6 cm oder weniger, oder 0,5 cm oder weniger. Die Dicke der Mattscheibe ist vorzugsweise 0,5 cm oder weniger, wie beispielsweise 0,4 cm oder weniger 0,3 cm oder weniger, 0,2 cm oder weniger, oder 0,1 cm oder weniger. Die geringe Dicke des mobilen Geräts bzw. der Mattscheibe ermöglichen eine kompakte und leichte Bauweise der erfindungsgemäßen Vorrichtung.

Die erfindungsgemäße Beleuchtungsvorrichtung ist ferner dazu ausgebildet, das von einer externen Lichtquelle kommende Beleuchtungs-Lichtstrahlenbündel auf das auf der Auflage angeordnete Brillenglas zu führen. Dadurch wird ermöglicht, dass auf die eigene Beleuchtung verzichtet und somit die Zahl an Komponenten und gegebenenfalls des Stromverbrauchs der erfindungsgemäßen Vorrichtung weiter verringert werden kann. Beispielsweise kann durch entsprechend ausgebildete Lichtleiter das Licht der Beleuchtungs-LED(s) des mobilen Geräts an die erforderliche Position für die Bereitstellung/Erzeugen des Beleuchtungs-Lichtstrahles gelenkt und in die Vorrichtung eingekoppelt werden. Das heißt, dass in diesem Fall sowohl die Bereitstellung des Beobachtungs-Lichtstrahlenbündels als auch das Empfangen und visuelle Darstellen des von dem Brillenglas kommenden Beobachtungs-Lichtstrahlenbündels durch das mobile Gerät erfolgt. Alternativ dazu wird mittels einer geeigneten Optik oder eines Spiegels eine externe Lichtquelle, wie beispielsweise die Sonne, die Deckenbeleuchtung, eine Schreibtischlampe oder eine Taschenlampe, eingespiegelt.

Eine Lichtquelle des mobilen Geräts ist als Beleuchtungs-Lichtstrahlenbündel mit der Vorrichtung gekoppelt. Dadurch kann auf die Verwendung einer vorrichtungseignen Lichtquelle und dazugehöriger Leitungen verzichtet werden. Ein weiterer Vorteil ist, dass die Betätigung der Lichtquelle und deren Intensitätseinstellung ohne weiteres über das mobile Gerät erfolgen werden kann.

Die Vorrichtung weist eine Kabelverbindung mit dem mobilen Gerät auf, um die Vorrichtung mit von dem mobilen Gerät mit elektrischer Spannung zu versorgen. Die Kabelverbindung kann beispielsweise über passende Steckverbindungen erfolgen. Die elektrische Spannung des mobilen Geräts wird zum Betreiben eines elektrischen Motors verwendet, um eine Bewegung des als Retroreflektor ausgebildeten Reflektors zu ermöglichen.

Durch diese Maßnahmen kann die Zahl der Komponenten und somit die Abmessung der erfindungsgemäßen Vorrichtung weiter verringert werden. Gleichermaßen wird die Wartung/Instandhaltung der erfindungsgemäßen Vorrichtung vereinfacht.

Gemäß einer besonders bevorzugten Ausführungsform der vorliegenden Erfindung wird ein computerimplementiertes Verfahren zur Steuerung des mobilen Geräts mit Bildaufnahmeeinrichtung und Bildanzeigeeinrichtung, insbesondere eines Smartphones oder Tablets, bereitgestellt. Das Verfahren ist zum Empfangen des von dem Brillenglas kommenden Beobachtungs-Lichtstrahlenbündels mit der Bildaufnahmeeinrichtung des mobilen Geräts und zum visuellen Darstellen des Signierzeichens mit der Bildanzeigeeinrichtung des mobilen Geräts angepasst.

Das computerimplementierte Verfahren stellt im einfachsten Fall den Empfang des von dem Brillenglas kommenden Beobachtungs-Lichtstrahlenbündels mit einer Bildaufnahmeeinrichtung des mobilen Geräts und ferner die visuelle Darstellung des Signierzeichens mit dem Bildanzeigeeinrichtung des mobilen Geräts bereit. Das heißt, in diesem Fall wird durch das computerimplementierte Verfahren sichergestellt, dass das Signierzeichen auf der Bildanzeigeeinrichtung des Smartphones in ausreichender Auflösung dargestellt wird, so dass der Betrachter die zu dessen Interpretation relevanten Bestandteile erkennen kann. Im Fall eines herkömmlichen Zeichensatzes heißt das, dass der Fachmann die dem Zeichensatz zugrundeliegenden Zeichen, wie bspw. Buchstaben eines Alphabets, Ziffern und/oder Symbole, derart mit bloßem Auge erkennen kann, dann dieser ohne weitere Interpretationshilfe die darin enthaltenen Informationen teilweise oder vollständig entnehmen kann. Das erfindungsgemäße computerimplementierte Verfahren wird für gewöhnlich in Form eines Programms bereitgestellt.

Gemäß einer weiteren Ausführungsform weist das Verfahren des Weiteren das Einstellen eines Abstands zwischen einem Objektiv und dem mobilen Gerät auf, wobei das Objektiv mit mindestens einem refraktiven, diffraktiven und/ oder reflektierenden optischen Element in einem Strahlengang des Beobachtungs-Lichtstrahls angeordnet ist. Dadurch wird erreicht, dass ein Bereich auf der Bildanzeigeeinrichtung des mobilen Geräts scharf abgebildet und gegebenenfalls vergrößert werden kann. Dieser Bereich umfasst vorzugsweise das Signierzeichen.

Gemäß einer weiteren Ausführungsform der vorliegenden Erfindung weist das Verfahren des Weiteren das visuelle Darstellen eines das Signierzeichen aufweisenden Bereichs des Brillenglases und/oder das Auswerten des Signierzeichens auf. Dadurch kann sichergestellt werden, dass uninteressante Bereiche auf dem Brillenglas, das heißt Bereiche ohne Signierzeichen, ausgeblendet werden. Ebenso können gegebenenfalls vorhandene Beschädigungen des Brillenglases ausgeblendet werden, so dass ein Kunde beispielsweise lediglich das Signierzeichen erkennt. Die Auswertung des Signierzeichens umfasst vorzugsweise die Darstellung der im Data-Matrix-Code enthaltenen Informationen als Klartextdarstellung. Die Klartextdarstellung kann graphische Elemente aufweisen, um die enthaltenen Informationen verständlicher darzustellen. Alternativ kann der Inhalt des Data-matrix-Codes akustisch über die Lautsprecher des mobilen Geräts wiedergegeben werden. Dies kann bspw. über einen von dem mobilen Gerät bereitgestellten Vorlesemodus erfolgen.

Des Weiteren kann das computerimplementierte Verfahren dazu ausgebildet sein, eine oder mehrere Bestandteile der Vorrichtung zu steuern bzw. diese anzusteuern und/oder die Vorrichtung mit Strom des mobilen Geräts zu versorgen. Steuern der Bestandteile der Vorrichtung kann beispielsweise Ein- und Ausschalten der elektrischen Komponenten einzeln oder in Kombination umfassen. Beispielsweise kann mit dem computerimplementierten Verfahren die Beleuchtungsvorrichtung an- bzw. ausgeschaltet und/oder gedimmt werden. Alternativ oder zusätzlich kann der Antrieb des als Retroreflektors ausgebildeten Reflektors gezielt angesteuert werden, so dass dessen An- bzw. Ausschalten und beispielsweise Drehgeschwindigkeit gezielt beeinflusst werden können. Ferner können weitere in der Vorrichtung enthaltene Optiken und/oder Spiegel elektrisch angesteuert werden, um eine gegebenenfalls erforderliche Anpassung zu erreichen.

Eine Verbindung des mobilen Geräts mit der Vorrichtung kann mittels einfacher Steckverbindung, einem Kabel, beispielsweise einen USB-Kabel, oder drahtlos über WLAN oder Bluetooth und/oder Infrarotschnittstelle erfolgen. Es ist klar, dass die elektrische Verbindung des mobilen Geräts mit der Vorrichtung auch über eine Kombination verschiedener der vorstehend genannten Möglichkeiten erfolgen kann. Beispielsweise kann die Stromversorgung der Beleuchtungsvorrichtung und/oder der Motorsteuerung des als Retroreflektor ausgebildeten Reflektors mittels Mikro-USB-Schnittstelle des mobilen Geräts erfolgen, wohingegen das Ansteuern der gegebenenfalls vorhandenen einen oder mehreren Optiken bzw. Objektive über beispielsweise WLAN erfolgt.

Das computerimplementierte Verfahren kann ferner dazu ausgestaltet sein, eine Aufnahme der visuellen Darstellung in dem mobilen Gerät abzuspeichern und/oder über eine vorzugsweise drahtlose Schnittstelle an eine weitere unabhängige Einheit, beispielsweise einem Desktop-Computer, beispielsweise für Sicherungszwecke oder allgemeinen Hinterlegung zu übersenden. Es ist klar, dass die Aufnahme gleichzeitig mit verschiedenen Informationen versehen werden kann, die die Aufnahme kennzeichnen. Dies kann beispielsweise eines oder mehreres umfassen wie ausgelesenen Daten, Kundenname, Kundennummer, Datum, Ort, Mitarbeiter, etc. Derartige Informationen können in der Datei und/oder dem Dateinamen enthalten sein. Beispielsweise kann die Datei die Aufnahme und die ausgelesen Daten beinhalten, wohingegen der Dateiname die Kundennummer und das Datum aufweist.

Gemäß einer weiteren Ausführungsform der vorliegenden Erfindung kann der Abstand zwischen der Visualisierungsvorrichtung und dem Brillenglas und/oder der Abstand zwischen dem als Retroreflektor ausgebildeten Reflektor und dem Brillenglas unabhängig voneinander eingestellt werden. Auf diese Art kann eine ausreichende Scharfstellung und damit erfolgende visuelle Darstellung des Signierzeichens ermöglicht werden.

Gemäß einer weiteren Ausführungsform der vorliegenden Erfindung wird Sonnenlicht oder Licht einer Lichtquelle eines mobilen Geräts als Beleuchtungslichtstrahlenbündel in die Vorrichtung eingekoppelt. Dies erfolgt im Fall von Sonnenlicht durch einen oder mehrere Spiegel und entsprechende Positionierung, so dass das Sonnenlicht als Beleuchtungsvorrichtung zum Leiten des Beobachtungs-Lichtstrahlenbündels verwendet werden kann. Im Fall einer Lichtquelle eines mobilen Geräts als Beobachtungs-Lichtstrahlenbündel kann die Lichtquelle des mobilen Geräts mit einem Lichtleiter an eine entsprechende geeignete Stelle der Vorrichtung verbunden werden. Vorzugsweise kann eine entsprechend verwendete Adapterschale zur Aufnahme eines mobilen Geräts an der vorgesehenen Stelle bereits einen Anschluss für einen Lichtleiter und/oder einen Lichtleiter enthalten. Besonders bevorzugt ist, dass in einer mobilen Vorrichtung der vorstehend genannten Art das mobile Gerät derart in die Adapterschale eingeschoben werden kann, dass gleichzeitig die Einspeisung des Lichts der Lichtquelle des mobilen Geräts in die erfindungsgemäße Vorrichtung erfolgt. Bei der Lichtquelle des mobilen Geräts handelt es sich vorzugsweise um das Blitzlicht des mobilen Geräts.

Gemäß einer weiteren Ausführungsform der vorliegenden Erfindung wird die Recheneinheit des mobilen Geräts zur Auswertung und/ oder Dekodierung der in dem Signierzeichen gespeicherten Information verwendet. Die Recheneinheit des mobilen Geräts kann insbesondere zur Auswertung und/ oder Dekodierung der in einem als Data-Matrix-Code ausgeführten Signierzeichen gespeicherten Information verwendet werden.

Es kann ferner vorgesehen sein, dass das erfindungsgemäße Verfahren nach der visuellen Darstellung des Beobachtungslichtstrahlenbündels, folgend den Schritt des Auswertens der auf dem Signierzeichen enthaltenen Informationen anzeigt. Zusätzlich kann die visuelle Darstellung an eine Arbeitsstation, bspw. einen Desktop Computer, übermittelt werden. Bei der Arbeitsstation handelt es sich ebenfalls um ein Gerät mit einer Bildanzeigevorrichtung, wobei dieses Gerät von dem verwendeten mobilen Gerät verschieden ist. Ebenso kann die Auswertung an die Arbeitsstation übermittelt werden. Die Übermittlung der visuellen Darstellung und/oder der Auswertung an die Arbeitsstation erfolgt vorzugsweise drahtlos, bspw. per WLAN.

Weitere Vorteile ergeben sich aus der Beschreibung und den beigefügten Zeichnungen.

Es versteht sich, dass die Erfindung in den Ansprüchen definiert ist.

Ausführungsbeispiele der Erfindung sind in den Zeichnungen dargestellt und werden in der nachfolgenden Beschreibung näher erläutert. Es zeigen:
- Fig. 1: ein Blockdiagramm einer Vorrichtung zum Sichtbarmachen eines Signierzeichens eines Brillenglases gemäß einer bevorzugten Ausführungsform;
- Fig. 2: ein Blockdiagramm einer Vorrichtung zum Sichtbarmachen eines Signierzeichens eines Brillenglases gemäß einer weiteren bevorzugten Ausführungsform;
- Fig. 3: eine schematische Darstellung einer Vorrichtung zum Sichtbarmachen eines Signierzeichens eines Brillenglases mit einem mobilen Gerät als Visualisierungsvorrichtung;
- Fig. 4a: eine schematische Darstellung einer Vorrichtung zum Sichtbarmachen eines Signierzeichens eines Brillenglases mit einer Mattscheibe als Visualisierungsvorrichtung;
- Fig. 4b: eine vergrößerte Darstellung eines Bereichs des Brillenglases, das das Signierzeichen aufweist;
- Fig. 5: eine schematische Darstellung einer Vorrichtung zum Sichtbarmachen eines Signierzeichens eines Brillenglases mit einem mobilen Gerät als Visualisierungsvorrichtung, wobei Licht aus der Beleuchtungs-LED des mobilen Geräts zum Leiten des Beleuchtungs-Lichtstrahlenbündels auf ein Brillenglas verwendet wird;
- Fig. 6: eine schematische Darstellung einer Vorrichtung zum Sichtbarmachen eines Signierzeichens eines Brillenglases, wobei Sonnenlicht mittels eines Spiegels in die Vorrichtung eingespeist wird, um den Beleuchtungs-Lichtstrahlenbündel auf ein Brillenglas zu leiten;
- Fig. 7: eine schematische Darstellung des erfindungsgemäßen computerimplementierten Verfahrens;
- Fig. 8: eine Vorrichtung zum Sichtbarmachen eines Signierzeichens eines Brillenglases, wobei die Visualisierungsvorrichtung in einer Halterung angeordnet ist;
- Fig. 9: eine schematische Darstellung des erfindungsgemäßen Verfahrens zum Sichtbarmachen eines Signierzeichens eines Brillenglases; und
- Fig. 10: ein mobiles Gerät als Visualisierungsvorrichtung, das in einer Halterung mit einem Handgriff angeordnet ist.

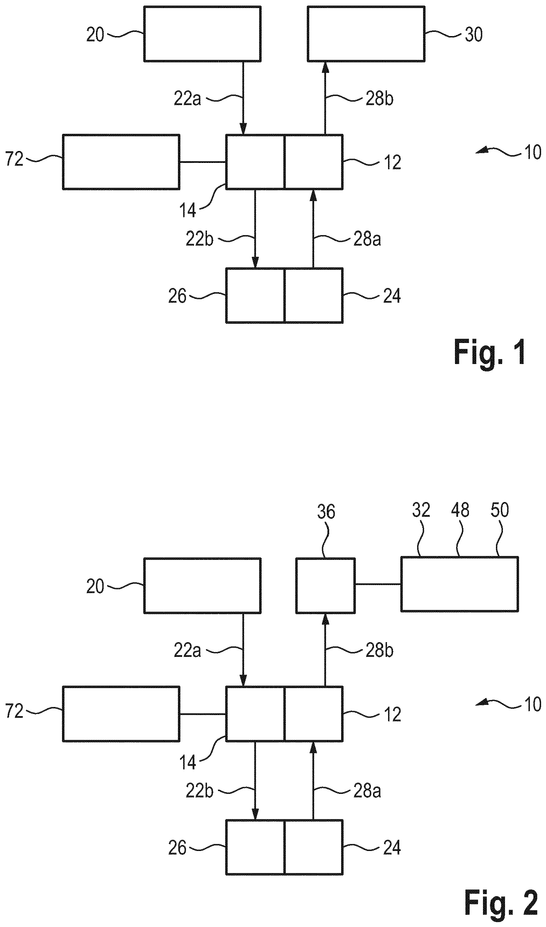

Die Fig. 1 zeigt eine Vorrichtung 10 zum Sichtbarmachen eines Signierzeichens 12 eines Brillenglases 14. Die Vorrichtung weist eine Auflage 72 für das Brillenglas 14, eine auf einen ersten Seite der Auflage 72 angeordneten Beleuchtungsvorrichtung 20 und einen auf der der ersten gegenüberliegenden zweiten Seite der Auflage 72 angeordneten, als Retroreflektor 24 ausgebildeten Reflektor 26 auf. Die Beleuchtungsvorrichtung 20 leitet ein Beleuchtungs-Lichtstrahlenbündel 22a auf das auf der Auflage 72 angeordnete Brillenglas 14. Um die Erkennung des Signierzeichens 12 zu ermöglichen, wird das Brillenglas 14 vom Beleuchtungs-Lichtstrahlenbündel 22a durchsetzt und trifft als gebrochenes Lichtstrahlenbündel 22b auf den als Retroreflektor 24 ausgebildeten Reflektor 26. Das reflektierte Lichtstrahlenbündel 28a durchsetzt das Brillenglas erneut und trifft als erneut gebrochenes Beobachtungsstrahlenbündel 28b auf die ebenfalls auf der ersten Seite der Auflage 72 angeordnete Visualisierungsvorrichtung 30, die das von dem Brillenglas 14 kommenden Beobachtungs-Lichtstrahlenbündel 28b empfängt und visuell darstellt.

Aus der Fig. 2 ist eine weitere Vorrichtung 10 zum Sichtbarmachen eines Signierzeichens 12 eines Brillenglases 14 ersichtlich. Die Vorrichtung 10 weist eine Auflage 72 für das Brillenglas 14, eine auf einer ersten Seite der Auflage 72 angeordneten Beleuchtungsvorrichtung 20 und einen auf der der ersten gegenüberliegenden zweiten Seite der Auflage 72 angeordneten, als Retroreflektor 24 ausgebildeten Reflektor 26 auf. Um die Erkennung des Signierzeichens 12 zu ermöglichen, wird das Brillenglas 14 vom Beleuchtungs-Lichtstrahlenbündel durchsetzt und trifft als gebrochenes Lichtstrahlenbündel 22b auf den als Retroreflektor 24 ausgebildeten Reflektor 26. Das reflektierte Lichtstrahlenbündel 28a durchsetzt das Brillenglas erneut und trifft als erneut gebrochenes Beobachtungsstrahlenbündel 28b auf die auf der ersten Seite der Auflage 72 angeordnete Halterung 36 zur Aufnahme eines mobilen Geräts 32. Das mobile Gerät 32 weist eine Bildaufnahmeeinrichtung 48 und Bildanzeigeeinrichtung 50 auf. Die Bildaufnahmeeinrichtung 48 ermöglicht den Empfang des von dem Brillenglas 14 kommenden Beobachtungs-Lichtstrahls 28b. Die visuelle Darstellung des Signierzeichens 12 erfolgt durch die Bildanzeigeeinrichtung 50 des mobilen Geräts 32.

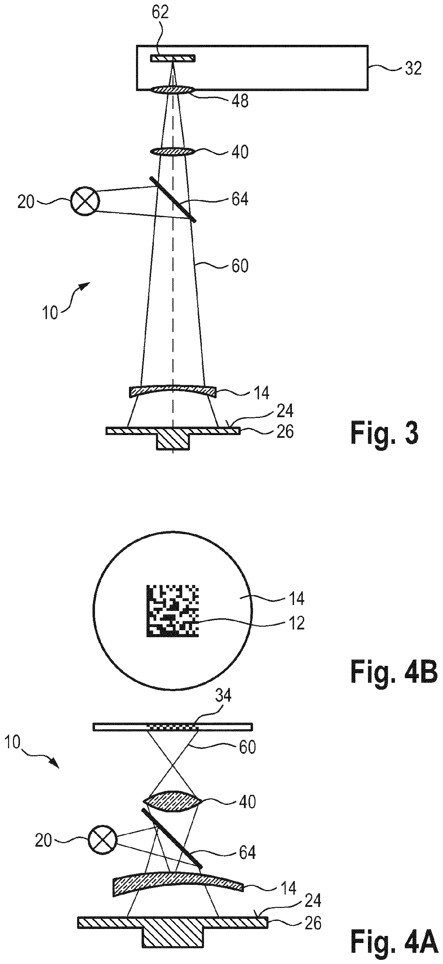

Aus den Figuren 3, 4a und 4b kann eine schematische Darstellung einer Vorrichtung 10 zum Sichtbarmachen eines Signierzeichens 12 eines Brillenglases 14 entnommen werden. Der Strahlengang innerhalb der Vorrichtung 10 wird schematisch mit dem Bezugszeichen 60 dargestellt. Licht der Lichtquelle 20 wird mittels eines Strahlteilers 64 in die Vorrichtung 10 eingekoppelt. Das Licht tritt durch das Brillenglas 14 hindurch und wird von einem als Retroreflektor ausgebildeten Reflektor 26 zurückgeworfen, tritt erneut durch das Brillenglas 14 und anschließend durch den Strahlteiler 64 und wird zur Vergrößerung des darzustellenden Bildes mit einem Objektiv 40 fokussiert. Das Objektiv 40 umfasst mindestens ein refraktives optisches Element, dass im Strahlengang 60 angeordnet ist.

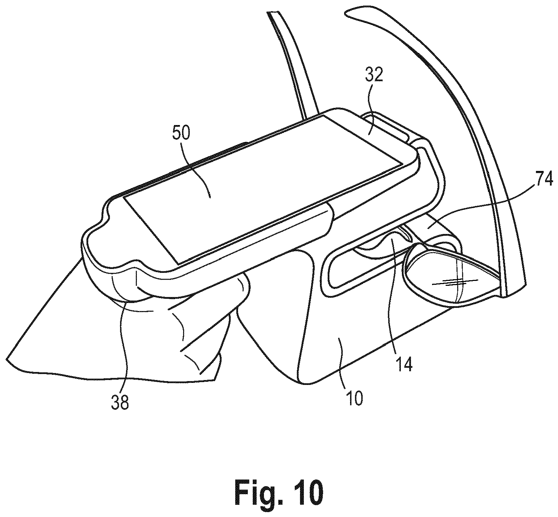

Das fokussierte Beobachtungslichtstrahlenbündel trifft in der Fig. 3 auf die Kameralinse 48 des mobilen Geräts 32 und schließlich auf den Bildsensor 62. Die visuelle Darstellung des Signierzeichens wird auf der Anzeigeeinrichtung 50 (vgl. Fig. 10) des mobilen Geräts 32 gezeigt.

Gemäß Fig. 4a trifft das Licht nach Fokussierung durch das Objektiv 40 auf die Mattscheibe 34. Das Objektiv 40 umfasst mindestens ein refraktives optisches Element, dass im Strahlengang 60 angeordnet ist. Aus Fig. 4b ist die Draufsicht der Mattscheibe 34 mit einer vergrößerten Ansicht eines Bereichs 44 des betrachteten Brillenglases 14 entnehmbar, wobei der Bereich 44 das Signierzeichen 12 im Form eines Data-Matrix-Codes aufweist.

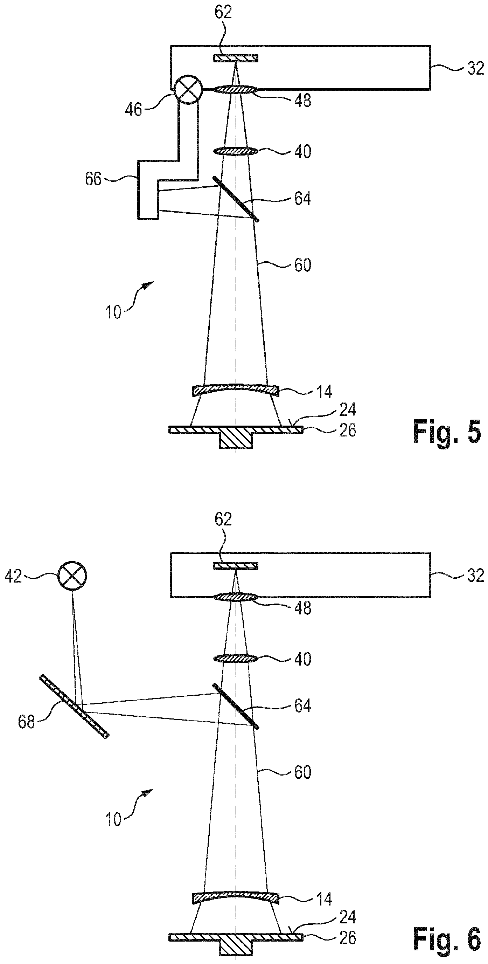

Die Fig. 5 zeigt einen alternativen Aufbau der Vorrichtung 10 zum Sichtbarmachen eines Signierzeichens 12 eines Brillenglases 14. Licht einer Beleuchtungs-LED 46 des mobilen Geräts 32 wird mittels eines Lichtwellenleiters 66 auf den Strahlteiler 64 projiziert, dort umgelenkt und trifft nach Durchtritt durch das Brillenglas 14 auf den als Retroreflektor ausgebildeten Reflektor 26. Der als Retroreflektor ausgebildete Reflektor Reflektor 26 reflektiert das auftreffende Licht, welches durch das Brillenglas 14, den Strahlteiler 64 und das Objektiv 40, bspw. mit einem refraktiven optischen Element, zum Fokussieren des Lichts trifft. Der Strahlengang 60 des Beleuchtungs-Lichtstrahlenbündel und Beobachtungs-Lichtstrahlenbündels wird gezeigt. Die Kameralinse 48 des mobilen Geräts 32 nimmt das vergrößerte Bild des Signierzeichens 14 mit dem Bildsensor 62 auf, wird in einer Speichervorrichtung des mobilen Geräts 32 gespeichert und mittels der Anzeigeeinrichtung 50 unmittelbar visuell dargestellt. Das mobile Gerät 32 wird mittels einer App gesteuert, die zum Empfangen des von dem Brillenglas 14 kommenden Beobachtungs-Lichtstrahlenbündels mit der Kameralinse 48 des mobilen Geräts 32 und zum visuellen Darstellen des Signierzeichens 12 mit einem Anzeigeeinrichtung 50 des mobilen Geräts 32 angepasst ist. Die App steuert ferner die Beleuchtungs-LED 46 zum Einkoppeln des Lichts der Beleuchtungs-LED 46 mittels Lichtwellenleiter 66 in die Vorrichtung 10 derart, dass eine Aufnahme des Signierzeichens 12 und ein Auslösen der Beleuchtungs-LED 46 gleichzeitig erfolgen.

Die Fig. 6 zeigt eine Abwandlung der in der Fig. 5 gezeigten Ausführungsform, in der anstelle eines Einkoppelns von Licht der Beleuchtungs-LED 46 des mobilen Geräts 32 mittels des Lichtwellenleiters 66 in die Vorrichtung 10, Sonnenlicht als externe Lichtquelle 42 verwendet wird. Das Sonnenlicht wird beispielsweise mittels eines Spiegels 68 in die Vorrichtung 10 eingekoppelt. Die auf dem mobilen Gerät 32 betriebene App ist angepasst zum Empfangen des von dem Brillenglas kommenden Beobachtungs-Lichtstrahlenbündels mit der Kamera 48 des mobilen Geräts 32 und zum visuellen Darstellen des Signierzeichens 12 mit einer Anzeigeeinrichtung 50 des mobilen Geräts 32. Ferner wird über die App 32 die Neigung des Spiegels 68 derart gesteuert, dass Sonnenlicht in die Vorrichtung 10 eingekoppelt wird. Die App steuert ferner die Aufnahmefunktion des mobilen Geräts 32 derart, dass die Aufnahme erst bei einer für die visuelle Darstellung ausreichenden Lichtintensität des eingestrahlten Sonnenlichts erfolgt.

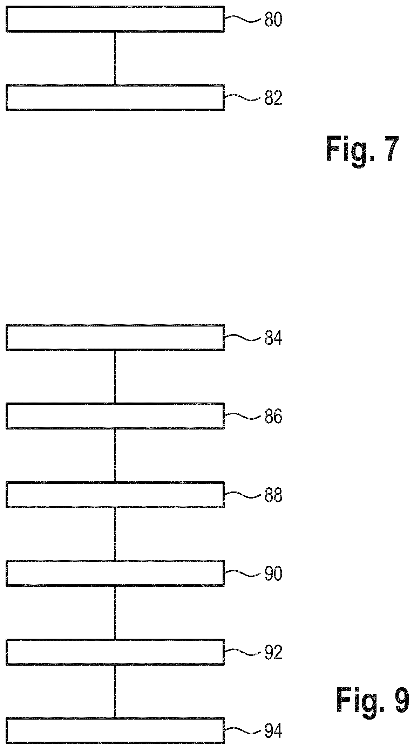

Die Fig. 7 zeigt die Schritte des erfindungsgemäßen computerimplementiertes Verfahrens zur Steuerung der Vorrichtung 10 durch das mobile Geräts 32 mit einer Bildaufnahmeeinrichtung 48 und einer Bildanzeigeeinrichtung 50. Das Empfangen des von dem Brillenglas kommenden Beobachtungs-Lichtstrahlenbündels 28 mit der Bildaufnahmeeinrichtung 48 des mobilen Geräts 32 wird mit dem Bezugszeichen 80 dargestellt. Anschließend erfolgt visuelles Darstellen 82 des Signierzeichens 12 mit der Bildanzeigeeinrichtung 50 des mobilen Geräts 32. Das computerimplementierte Verfahren ist unter zur Verwendung mit einem mobilen Gerät gemäß der Vorrichtung aus Fig. 1 vorgesehen. Es ist klar, dass die Vorrichtung aus Fig. 2 ebenso verwendet werden kann, sofern ein mobiles Gerät 32 mit Bildaufnahmeeinrichtung 48 und Bildanzeigeeinrichtung 50 zum Einsatz gelangt.

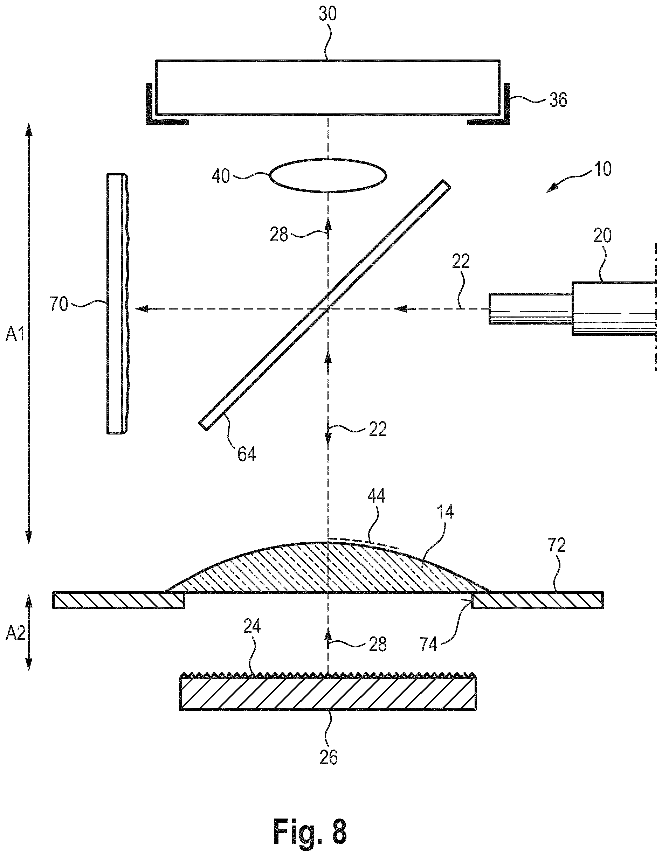

Die Fig. 8 zeigt eine weitere Ausführungsform der vorliegenden Erfindung. Die Beleuchtungsvorrichtung 20 der Vorrichtung 10 zum Sichtbarmachen eines Signierzeichens 12 erzeugt das Beleuchtungs-Lichtstrahlenbündel 22 für die Erkennung des Signierzeichens 12 in dem Bereich 44 des Brillenglases 14. Das Beleuchtungs-Lichtstrahlenbündel 22 trifft auf den Strahlteiler 64, tritt teilweise durch diesen hindurch und wird von einer Lichtfalle 70 absorbiert, die hinter dem Strahlteiler 64 angeordnet ist. Ein anderer Anteil des Beleuchtungs-Lichtstrahlenbündel 22 wird rechtwinklig von dem Strahlteiler 64 abgelenkt und tritt durch das Brillenglas 14, das auf der Auflage 72 mit Aussparung 74 aufliegt. Ein unterhalb des Brillenglases 14 angeordneter als Retroreflektor 24 ausgebildeter Reflektor 26 reflektiert das Beobachtungs-Lichtstrahlenbündel 28, der nach Durchtritt durch das Brillenglas 14 mit dem das Signierzeichen 12 aufweisenden Bereich 44 und anschließend durch den Strahlteiler 64 gelenkt wird. Der als Retroreflektor ausgebildete Reflektor 26 wird dabei durch einen Motor (nicht gezeigt) zur Drehung angetrieben. Das Beobachtungs-Lichtstrahlenbündel kann gegebenenfalls mittels eines Objektivs 40, das ein oder mehrere refraktive, diffraktive und/ oder reflektierende Elemente aufweist, fokussiert werden und trifft anschließend auf die Visualisierungsvorrichtung 30, die in einer Halterung 36 angeordnet ist. Die Halterung 36 kann hierbei Abmessungen aufweisen, die eine Anordnung eines mobilen Geräts 32 ausgewählt aus einem Smartphone oder einen Tablet oder alternativ einer Mattscheibe 34 ermöglichen. Um die visuelle Darstellung des Signierzeichens 12 weiter zu verbessern, kann ein erster Abstand A1 zwischen der Visualisierungsvorrichtung 30 und dem Brillenglas 14 vergrößert oder verringert werden. Ebenso kann ein zweiter Abstand A2 zwischen dem Brillenglas 14 und dem Retroreflektor 24 vergrößert oder verringert werden. Es ist klar, dass weitere optische Elemente, insbesondere Linsen, in verschiedenen Bereichen des Beleuchtungs-Lichtstrahlenbündel 22 und/oder dem Beobachtungs-Lichtstrahlenbündel 28 angeordnet sein können, um das Beobachtungs-Lichtstrahlenbündel 28 derart auf der Visualisierungsvorrichtung 30 abzubilden, dass die visuelle Darstellung des Signierzeichens 12 in ausreichender Qualität ermöglicht wird. In ausreichender Qualität heißt hierbei, dass der Benutzer beispielsweise den als Signierzeichen verwendeten Data-Matrix-Code ausreichend erkennen und entweder mittels direkter Visualisierung des Data-Matrix-Codes oder nach Auslesen des Data-Matrix-Codes durch die App erkennen kann.

Aus der Fig. 9 sind die Schritte des erfindungsgemäßen Verfahrens zum Sichtbarmachen eines Signierzeichens 12 eines Brillenglases 14 ersichtlich. Ein Beleuchtungs-Lichtstrahlenbündel 22 wird durch das Brillenglas 14 gelenkt (84). Das durch das Brillenglas 14 gelenkte Beleuchtungs-Lichtstrahlenbündel 22 trifft anschließend auf einen als Retroreflektor 24 ausgebildeten Reflektor 26 und wird als Beobachtungs-Lichtstrahlenbündel 28 reflektiert (86). Das Beobachtungs-Lichtstrahlenbündel 28 wird durch das Brillenglas 14 gelenkt (88) und anschließend auf eine Visualisierungsvorrichtung 30 gelenkt. Die Visualisierungsvorrichtung 30 empfängt 92 das von dem Brillenglas 14 kommenden Beobachtungs-Lichtstrahlenbündel 28 und stellt es visuell dar (94).

In der Fig. 10 ist eine schematische Darstellung einer mobilen Version der Vorrichtung 10 zum Sichtbarmachen eines Signierzeichens 12 eines Brillenglases 14 zu sehen. Ein Benutzer trägt die mit einem Handgriff 38 versehene Vorrichtung 10. Die Halterung 36 ermöglicht die Aufnahme des Signierzeichens 12 des in einer Aussparung 74 der Vorrichtung 10 aufgenommen Brillenglases 14 durch das mobile Gerät 32 und die visuelle Darstellung des Signierzeichens 12 durch die Anzeigeeinrichtung 50. Der Benutzer kann die Aufnahmeoptik bzw. ein Objektiv 40 des mobilen Geräts 32 derart positionieren, dass das Beobachtungs-Lichtstrahlenbündel 28 mit der Kamera 48 des mobilen Geräts 32 aufgenommen wird und schließlich unmittelbar mit der Anzeigeeinrichtung 50 des mobilen Geräts 32 visualisiert wird. Die auf dem mobilen Gerät 32 enthaltene App kann hierbei erkennen, wann die Halterung 36 von dem Benutzer derart zu dem Beobachtungs-Lichtstrahlenbündel 28 positioniert ist, dass die visuelle Darstellung ermöglicht wird. Die Halterung 36 und/oder der Handgriff 38 ist mit Betätigungselementen (nicht gezeigt), wie beispielsweise einem oder mehreren Knöpfen oder einem pistolenähnlichen Abzug versehen. Das Betätigungsmittel ist hierbei über beispielsweise den Mikro-USB-Anschluss des mobilen Geräts derart verbunden, dass relevante Funktionen der App durch die Betätigungselemente gesteuert werden können. Die Halterung kann gegen andere Halterungen 36 ausgetauscht werden, die die Aufnahme eines anderen mobilen Geräts 32 oder einer Mattscheibe 34 ermöglichen. Bspw. kann bei der Verwendung einer Mattscheibe 34 die Beleuchtungsvorrichtung 20 durch ein Betätigungselement angesteuert werden. Die Halterung kann gegen andere Halterungen 36 ausgetauscht werden, die die Aufnahme eines anderen mobilen Geräts 32 oder einer Mattscheibe 34 ermöglichen.

Aufgrund der Tatsache, dass es auf dem Markt unterschiedlich große mobile Geräte 32 gibt, können angepasste Adapterschalen oder Halterungen 36 zur Verfügung gestellt werden. Diese Adapterschalen weisen Abmessungen auf, die zum Beispiel zur Aufnahme eines Smartphones oder eines Tablets eines bestimmten Typs oder einer Mattscheibe 34 angepasst sind.

Sofern die Kamera 48 des mobilen Geräts 32 nicht in der Lage ist, Signierzeichen 12 selbst aufzulösen, das heißt ausreichend zu vergrößern, kann die Vorrichtung 10 mit dem Objektiv 40 zwischen der Visualisierungsvorrichtung 30 und dem Brillenglas 14 versehen sein. Das Objektiv 40 kann hierbei in Form einer fest verbauten Linse vorliegen. Das Objektiv 40 der Vorrichtung 10 und eine Optik des mobilen Geräts 32 können direkt auf den Bildsensor 62 des mobilen Geräts abbilden. Die App kann dann den Data-Matrix-Code bzw. das Signierzeichen 12 decodieren und ermöglicht es dem Anwender, dass der Fokus an dem Objektiv 40 manuell eingestellt wird. Des Weiteren kann das Objektiv 40 der Vorrichtung 10 den Data-Matrix-Code bzw. das Signierzeichen 12 vergrößert auf eine Mattscheibe 34 abbilden. Der auf der Mattscheibe abgebildete Data-Matrix-Code bzw. das Signierzeichen 12 kann auf herkömmliche Art und Weise mit dem mobilen Gerät 32 ausgelesen werden, ohne dass der Fokus manuell einstellbar sein muss. Das mobile Gerät 32 kann dabei wie gewohnt in der Hand gehalten werden oder in einer mit einem Handgriff 38 versehenen Halterung 36 angeordnet sein. Die Stromversorgung der Beleuchtungs-LED kann über eines oder mehrere ausgewählt unter einem Netzteil, einer Batterie oder einem Akku, eine Schnittstelle des mobilen Geräts 32 oder Solarzellen erfolgen.

Indem ferner durch Änderung des ersten Abstands A1 der Retroreflektor 24 weiter von dem zu untersuchenden Brillenglas 14 platziert wird, kann es aufgrund einer geringen Schärfentiefe des Objektivs 40 möglich sein, die Strukturen des Retroreflektors 24, ohne diesen zu drehen, nicht scharf abzubilden.

Der als Retroreflektor ausgebildete Reflektor 26 kann alternativ auch mit einem entsprechenden Antrieb zur Drehung (nicht gezeigt) versehen werden. Ferner kann eine angepasste Bildbearbeitung der App nicht das ganze Bild darstellen, sondern nur schematisch den Data-Matrix-Code in dem Bereich 44 des Brillenglases 14, das das Signierzeichen 12 aufweist. In diesem Fall kann der als Retroreflektor ausgebildete Reflektor 26 auch nahe an dem zu untersuchenden Brillenglas angeordnet sein. Dies kann in allen Ausgestaltungen der Erfindung vorgesehen sein.

## Patentansprüche

1. Vorrichtung (10) zum Sichtbarmachen eines Signierzeichens (12) eines Brillenglases (14), mit
- einer Auflage (72) für das Brillenglas (14), wobei die Auflage (72) eine erste Seite und eine der der ersten Seite gegenüberliegende zweite Seite aufweist;
- einer auf der ersten Seite der Auflage (72) für das Brillenglas (14) angeordneten Beleuchtungsvorrichtung (20) zum Leiten eines Beleuchtungs-Lichtstrahlenbündels (22) auf das auf der Auflage (72) angeordnete Brillenglas (14), für eine Erkennung des Signierzeichens (12); und
- einem auf der zweiten Seite der Auflage (72) angeordneten, als Retroreflektor (24) ausgebildeten Reflektor (26);
wobei die Vorrichtung (10) eine auf der ersten Seite der Auflage (72) für das Brillenglas (14) angeordnete und zum Empfangen und visuellen Darstellen eines von dem Brillenglas (14) kommenden Beobachtungs-Lichtstrahlenbündels (28) ausgebildete Visualisierungsvorrichtung (30) aufweist, wobei die Visualisierungsvorrichtung (30) ein mobiles Gerät (32) mit einer Bildaufnahmeeinrichtung (48) und einer Bildanzeigeeinrichtung (50), insbesondere ein Smartphone oder ein Tablet, ist, **dadurch gekennzeichnet, dass** die Beleuchtungsvorrichtung (20) dazu ausgebildet ist, das von einer externen Lichtquelle (42) kommenden Beleuchtungs-Lichtstrahlenbündel (22) auf das auf der Auflage (72) angeordnete Brillenglas (14) zu führen, wobei die Visualisierungsvorrichtung (30) lösbar in einer Halterung (36) angeordnet ist,
wobei die Vorrichtung (10) eine Kabelverbindung mit dem mobilen Gerät (32) aufweist, um die Vorrichtung (10) mit elektrischer Spannung von dem mobilen Gerät (32) zu versorgen, wobei die elektrische Spannung des mobilen Geräts (32) für ein Betreiben eines elektrischen Motors verwendet wird, um eine Bewegung des als Retroreflektor (24) ausgebildeten Reflektors (26) zu ermöglichen,
wobei eine Frequenz einer periodischen Bewegung des als Retroreflektor (24) ausgebildeten Reflektors (26) an ein Synchronisiersignal der Visualisierungsvorrichtung (30) angepasst wird.

2. Vorrichtung (10) nach einem der vorstehenden Ansprüche, wobei ein Objektiv (40) mit mindestens einem refraktiven, diffraktiven und/oder reflektierenden optischen Element in einem Strahlengang des Beobachtungs-Lichtstrahlenbündels (28) angeordnet ist.

3. Vorrichtung (10) zum Sichtbarmachen eines Signierzeichens (12) eines Brillenglases (14), mit
- einer Auflage (72) für das Brillenglas (14), wobei die Auflage (72) eine erste Seite und eine der der ersten Seite gegenüberliegende zweite Seite aufweist;
- einer auf der ersten Seite der Auflage (72) für das Brillenglas (14) angeordneten Beleuchtungsvorrichtung (20) zum Leiten eines Beleuchtungs-Lichtstrahlenbündel (22) auf das auf der Auflage (72) angeordnete Brillenglas (14), für eine Erkennung des Signierzeichens (12); und
- einem auf der zweiten Seite der Auflage (72) für das Brillenglas (14) angeordneten, als Retroreflektor (24) ausgebildeten Reflektor (26);
**dadurch gekennzeichnet, dass** die Vorrichtung (10) eine auf der ersten Seite der Auflage (72) für das Brillenglas (14) angeordnete Halterung (36) zur lösbaren Aufnahme eines mobilen Geräts (32) mit einer Bildaufnahmeeinrichtung (48) und einer Bildanzeigeeinrichtung (50), insbesondere eines Smartphones oder eines Tablets, aufweist und eine Lichtquelle (46) des mobilen Geräts (32) als Beleuchtungs-Lichtstrahlenbündel (22) mit der Vorrichtung (10) gekoppelt ist,
wobei die Vorrichtung (10) eine Kabelverbindung mit dem mobilen Gerät (32) aufweist, um die Vorrichtung (10) mit elektrischer Spannung von dem mobilen Gerät (32) zu versorgen, wobei die elektrische Spannung des mobilen Geräts (32) für ein Betreiben eines elektrischen Motors verwendet wird, um eine Bewegung des als Retroreflektor (24) ausgebildeten Reflektors (26) zu ermöglichen,
wobei eine Frequenz einer periodischen Bewegung des als Retroreflektor (24) ausgebildeten Reflektors (26) an ein Synchronisiersignal der Visualisierungsvorrichtung (30) angepasst wird.

4. Computerimplementiertes Verfahren zur Steuerung der Vorrichtung (10) nach Anspruch 1, **gekennzeichnet durch** die Schritte des Empfangens des von dem Brillenglas kommenden Beobachtungs-Lichtstrahlenbündels (28) mit der Bildaufnahmeeinrichtung (48) des mobilen Geräts (32) und des visuellen Darstellens des Signierzeichens (12) mit der Bildanzeigeeinrichtung (50) des mobilen Geräts (32).

5. Computerimplementiertes Verfahren nach Anspruch 4, wobei das Verfahren des Weiteren das Einstellen eines Abstands zwischen einem Objektiv (40) und dem mobilen Gerät (32) aufweist, wobei das Objektiv (40) mit mindestens einem refraktiven, diffraktiven und/oder reflektierenden optischen Element in einem Strahlengang des Beobachtungs-Lichtstrahlenbündels (28) angeordnet ist.

6. Computerimplementiertes Verfahren nach Anspruch 4 oder 5, wobei das Verfahren des Weiteren das visuelle Darstellen eines das Signierzeichen (12) aufweisenden Bereichs (44) des Brillenglases (14) und/oder das Auswerten des Signierzeichens (12) aufweist.

7. Verfahren zum Sichtbarmachen eines Signierzeichens (12) eines Brillenglases (14), mit den folgenden Schritten
- Lenken (84) eines Beleuchtungs-Lichtstrahlenbündels (22) durch das Brillenglas (14), wobei Sonnenlicht als Beleuchtungs-Lichtstrahlenbündels (22) in die Vorrichtung (10) nach einem der Ansprüche 1 bis 2 eingekoppelt wird;
- Reflektieren (86) des Beleuchtungs-Lichtstrahlenbündels (22) als Beobachtungs-Lichtstrahlenbündels (28) an einem als Retroreflektor (24) ausgebildeten Reflektor (26);
- Lenken (88) des Beobachtungs-Lichtstrahlenbündels (28) durch das Brillenglas (14);
- Lenken (90) des durch das Brillenglas (14) hindurchdurchgetretenen Beobachtungs-Lichtstrahlenbündels (28) auf eine Visualisierungsvorrichtung (30); und
- Empfangen (92) und visuelles Darstellen (94) des von dem Brillenglas (14) kommenden Beobachtungs-Lichtstrahlenbündels (28) durch die Visualisierungsvorrichtung (30),
wobei die Vorrichtung (10) eine Kabelverbindung mit dem mobilen Gerät (32) aufweist, um die Vorrichtung (10) mit elektrischer Spannung von dem mobilen Gerät (32) zu versorgen, wobei die elektrische Spannung des mobilen Geräts (32) für ein Betreiben eines elektrischen Motors verwendet wird, um eine Bewegung des als Retroreflektor (24) ausgebildeten Reflektors (26) zu ermöglichen,
wobei eine Frequenz einer periodischen Bewegung des als Retroreflektor (24) ausgebildeten Reflektors (26) an ein Synchronisiersignal der Visualisierungsvorrichtung (30) angepasst wird.

8. Verfahren zum Sichtbarmachen eines Signierzeichens (12) eines Brillenglases (14), mit den folgenden Schritten
- Lenken (84) eines Beleuchtungs-Lichtstrahlenbündels (22) durch das Brillenglas (14), wobei Licht einer Lichtquelle (46) eines mobilen Geräts (32) als Beleuchtungs-Lichtstrahlenbündels (22) in die Vorrichtung (10) nach Anpruch 3 eingekoppelt wird;
- Reflektieren (86) des Beleuchtungs-Lichtstrahlenbündels (22) als Beobachtungs-Lichtstrahlenbündels (28) an einem als Retroreflektor (24) ausgebildeten Reflektor (26);
- Lenken (88) des Beobachtungs-Lichtstrahlenbündels (28) durch das Brillenglas (14);
- Lenken (90) des durch das Brillenglas (14) hindurchdurchgetretenen Beobachtungs-Lichtstrahlenbündels (28) auf eine Visualisierungsvorrichtung (30); und
- Empfangen (92) und visuelles Darstellen (94) des von dem Brillenglas (14) kommenden Beobachtungs-Lichtstrahlenbündels (28) durch die Visualisierungsvorrichtung (30),
wobei die Vorrichtung (10) eine Kabelverbindung mit dem mobilen Gerät (32) aufweist, um die Vorrichtung (10) mit elektrischer Spannung von dem mobilen Gerät (32) zu versorgen, wobei die elektrische Spannung des mobilen Geräts (32) für ein Betreiben eines elektrischen Motors verwendet wird, um eine Bewegung des als Retroreflektor (24) ausgebildeten Reflektors (26) zu ermöglichen,
wobei eine Frequenz einer periodischen Bewegung des als Retroreflektor (24) ausgebildeten Reflektors (26) an ein Synchronisiersignal der Visualisierungsvorrichtung (30) angepasst wird.

9. Verfahren nach Anspruch 7 oder 8, wobei ein erster Abstand (A1) zwischen der Visualisierungsvorrichtung (30) und dem Brillenglas (14) und/oder ein zweiter Abstand (A2) zwischen dem als Retroreflektor (24) ausgebildeten Reflektor (26) und dem Brillenglas (14) eingestellt wird.

10. Verwendung eines mobilen Geräts (32) mit einer Bildaufnahmeeinrichtung (48) und Bildanzeigeeinrichtung (50), insbesondere eines Smartphones oder eines Tablets zur Erfassung, visuellen Darstellung und/oder Auswertung eines Beobachtungs-Lichtstrahlenbündels (28) der Vorrichtung (10) nach einem der Ansprüche 1 bis 5, zum Sichtbarmachen eines Signierzeichens (12) eines Brillenglases (14), wobei das mobile Gerät (32) lösbar in einer Halterung (36) angeordnet ist
wobei die Vorrichtung (10) eine Kabelverbindung mit dem mobilen Gerät (32) aufweist, um die Vorrichtung (10) mit elektrischer Spannung von dem mobilen Gerät (32) zu versorgen, wobei die elektrische Spannung des mobilen Geräts (32) für ein Betreiben eines elektrischen Motors verwendet wird, um eine Bewegung des als Retroreflektor (24) ausgebildeten Reflektors (26) zu ermöglichen,
wobei eine Frequenz einer periodischen Bewegung des als Retroreflektor (24) ausgebildeten Reflektors (26) an ein Synchronisiersignal der Visualisierungsvorrichtung (30) angepasst wird.

11. Verwendung nach Anspruch 10 wobei die Recheneinheit des mobilen Geräts zur Auswertung und/ oder Dekodierung der in dem Signierzeichen gespeicherten Information verwendet wird.

## Claims

1. Appliance (10) for visualizing a signature mark (12) of a spectacle lens (14), having
- a support (72) for the spectacle lens (14), wherein the support (72) comprises a first side and a second side opposite the first side;
- an illumination appliance (20), arranged on the first side of the support (72) for the spectacle lens (14), for guiding an illumination light beam (22) onto the spectacle lens (14), arranged on the support (72), for identifying the signature mark (12); and
- a reflector (26), arranged on the second side of the support (72) and formed as a retroreflector (24) ;
wherein the appliance (10) comprises a visualization appliance (30) arranged on the first side of the support (72) for the spectacle lens (14) and formed for receiving and visually displaying an observation light beam (28) coming from the spectacle lens (14), wherein the visualization appliance (30) is a mobile device (32) having an image recording apparatus (48) and an image displaying apparatus (50), in particular a smart phone or a tablet, **characterized in that** the illumination appliance (20) is formed to lead the illumination light beam (22) coming from an external light source (42) onto the spectacle lens (14) arranged on the support (72), wherein the visualization appliance (30) is arranged detachably in a holder (36),
wherein the appliance (10) has a cable connection with the mobile device (32), in order to supply the appliance (10) with electrical voltage from the mobile device (32), wherein the electrical voltage of the mobile device (32) is used for operating an electric motor, in order to enable a movement of the reflector (26) formed as a retroreflector (24),
wherein a frequency of a periodic movement of the reflector (26) formed as a retroreflector (24) is matched to a synchronization signal of the visualization appliance (30).

2. Appliance (10) according to any of the preceding claims, wherein a lens (40) with at least one refractive, diffractive and/or reflecting optical element is arranged in a beam path of the observation light beam (28).

3. Appliance (10) for visualizing a signature mark (12) of a spectacle lens (14), having
- a support (72) for the spectacle lens (14), wherein the support (72) comprises a first side and a second side opposite the first side;
- an illumination appliance (20), arranged on the first side of the support (72) for the spectacle lens (14), for guiding an illumination light beam (22) onto the spectacle lens (14), arranged on the support (72), for identifying the signature mark (12); and
- a reflector (26), arranged on the second side of the support (72) for the spectacle lens (14) and formed as a retroreflector (24);
**characterized in that** the appliance (10) comprises a holder (36), arranged on the first side of the support (72) for the spectacle lens (14), for detachably mounting a mobile device (32) having an image recording apparatus (48) and an image displaying apparatus (50), in particular a smart phone or a tablet, and a light source (46) of the mobile device (32) is coupled to the appliance (10) as an illumination light beam (22),
wherein the appliance (10) has a cable connection with the mobile device (32), in order to supply the appliance (10) with electrical voltage from the mobile device (32), wherein the electrical voltage of the mobile device (32) is used for operating an electric motor, in order to enable a movement of the reflector (26) formed as a retroreflector (24),
wherein a frequency of a periodic movement of the reflector (26) formed as a retroreflector (24) is matched to a synchronization signal of the visualization appliance (30).

4. Computer-implemented method for controlling the appliance (10) according to Claim 1, **characterized by** the steps of receiving the observation light beam (28) coming from the spectacle lens using the image recording apparatus (48) of the mobile device (32) and visually displaying the signature mark (12) using the image displaying apparatus (50) of the mobile device (32).

5. Computer-implemented method according to Claim 4, wherein the method furthermore comprises setting a distance between a lens (40) and the mobile device (32), wherein the lens (40) with at least one refractive, diffractive and/or reflecting optical element is arranged in a beam path of the observation light beam (28).

6. Computer-implemented method according to Claim 4 or 5, wherein the method furthermore comprises visually displaying an area (44), having the signature mark (12), of the spectacle lens (14) and/or evaluating the signature mark (12).

7. Method for visualizing a signature mark (12) of a spectacle lens (14), having the following steps
- guiding (84) an illumination light beam (22) through the spectacle lens (14), wherein sunlight is coupled into the appliance (10) according to any of Claims 1 to 2 as an illumination light beam (22);
- reflecting (86) the illumination light beam (22) as an observation light beam (28) at a reflector (26) formed as a retroreflector (24);
- guiding (88) the observation light beam (28) through the spectacle lens (14);
- guiding (90) the observation light beam (28), which has passed through the spectacle lens (14), onto a visualization appliance (30); and
- receiving (92) and visually displaying (94) the observation light beam (28) coming from the spectacle lens (14) by means of the visualization appliance (30),
wherein the appliance (10) has a cable connection with the mobile device (32), in order to supply the appliance (10) with electrical voltage from the mobile device (32), wherein the electrical voltage of the mobile device (32) is used for operating an electric motor, in order to enable a movement of the reflector (26) formed as a retroreflector (24),
wherein a frequency of a periodic movement of the reflector (26) formed as a retroreflector (24) is matched to a synchronization signal of the visualization appliance (30).

8. Method for visualizing a signature mark (12) of a spectacle lens (14), having the following steps
- guiding (84) an illumination light beam (22) through the spectacle lens (14), wherein light of a light source (46) of a mobile device (32) is coupled into the appliance (10) according to Claim 3 as an illumination light beam (22);
- reflecting (86) the illumination light beam (22) as an observation light beam (28) at a reflector (26) formed as a retroreflector (24);
- guiding (88) the observation light beam (28) through the spectacle lens (14);
- guiding (90) the observation light beam (28), which has passed through the spectacle lens (14), onto a visualization appliance (30); and
- receiving (92) and visually displaying (94) the observation light beam (28) coming from the spectacle lens (14) by means of the visualization appliance (30),
wherein the appliance (10) has a cable connection with the mobile device (32), in order to supply the appliance (10) with electrical voltage from the mobile device (32), wherein the electrical voltage of the mobile device (32) is used for operating an electric motor, in order to enable a movement of the reflector (26) formed as a retroreflector (24),
wherein a frequency of a periodic movement of the reflector (26) formed as a retroreflector (24) is matched to a synchronization signal of the visualization appliance (30).

9. Method according to Claim 7 or 8, wherein a first distance (A1) between the visualization appliance (30) and the spectacle lens (14) and/or a second distance (A2) between the reflector (26) formed as a retroreflector (24) and the spectacle lens (14) is set.

10. Use of a mobile device (32) having an image recording apparatus (48) and image displaying apparatus (50), in particular a smart phone or a tablet, for capturing, visually displaying and/or evaluating an observation light beam (28) of the appliance (10) according to any of Claims 1 to 5, for visualizing a signature mark (12) of a spectacle lens (14), wherein the mobile device (32) is arranged detachably in a holder (36)
wherein the appliance (10) has a cable connection with the mobile device (32), in order to supply the appliance (10) with electrical voltage from the mobile device (32), wherein the electrical voltage of the mobile device (32) is used for operating an electric motor, in order to enable a movement of the reflector (26) formed as a retroreflector (24),
wherein a frequency of a periodic movement of the reflector (26) formed as a retroreflector (24) is matched to a synchronization signal of the visualization appliance (30).

11. Use according to Claim 10
wherein the computing unit of the mobile device is used for evaluating and/or decoding the information stored in the signature mark.

## Revendications

1. Arrangement (10) pour rendre visible un signe de marquage (12) d'un verre de lunettes (14), comprenant
- un support (72) pour le verre de lunettes (14), le support (72) possédant un premier côté et un deuxième côté opposé au premier côté ;
- un arrangement d'éclairage (20) disposé sur le premier côté du support (72) pour le verre de lunettes (14), destiné à guider un faisceau de rayons lumineux d'éclairage (22) sur le verre de lunettes (14) disposé sur le support (72) pour une reconnaissance du signe de marquage (12) ; et
- un réflecteur (26) réalisé sous la forme d'un rétroréflecteur (24) disposé sur le deuxième côté du support (72) ;
l'arrangement (10) possédant un arrangement de visualisation (30) disposé sur le premier côté du support (72) pour le verre de lunettes (14) et configuré pour recevoir et représenter visuellement un faisceau de rayons lumineux d'observations (28) en provenance du verre de lunettes (14), l'arrangement de visualisation (30) étant un appareil mobile (32) doté d'un dispositif d'enregistrement d'images (48) et d'un dispositif d'affichage d'images (50), notamment un Smartphone ou une tablette, **caractérisé en ce que** l'arrangement d'éclairage (20) est configuré pour guider le faisceau de rayons lumineux d'éclairage (22) en provenance d'une source de lumière (42) externe sur le verre de lunettes (14) disposé sur le support (72), l'arrangement de visualisation (30) étant disposé de manière amovible dans un élément de maintien (36), l'arrangement (10) possédant une liaison par câble avec l'appareil mobile (32) afin d'alimenter l'arrangement (10) avec une tension électrique depuis l'appareil mobile (32), la tension électrique de l'appareil mobile (32) étant utilisée pour un fonctionnement d'un moteur électrique en vue de rendre possible un mouvement du réflecteur (26) réalisé sous la forme d'un rétroréflecteur (24),
une fréquence d'un mouvement périodique du réflecteur (26) réalisé sous la forme d'un rétroréflecteur (24) étant adaptée à un signal de synchronisation de l'arrangement de visualisation (30).

2. Arrangement (10) selon l'une des revendications précédentes, un objectif (40) comprenant au moins un élément optique réfractif, diffractif et/ou réfléchissant étant disposé dans un trajet de rayon du faisceau de rayons lumineux d'observation (28).

3. Arrangement (10) pour rendre visible un signe de marquage (12) d'un verre de lunettes (14), comprenant
- un support (72) pour le verre de lunettes (14), le support (72) possédant un premier côté et un deuxième côté opposé au premier côté ;
- un arrangement d'éclairage (20) disposé sur le premier côté du support (72) pour le verre de lunettes (14), destiné à guider un faisceau de rayons lumineux d'éclairage (22) sur le verre de lunettes (14) disposé sur le support (72) pour une reconnaissance du signe de marquage (12) ; et
- un réflecteur (26) réalisé sous la forme d'un rétroréflecteur (24) disposé sur le deuxième côté du support (72) pour le verre de lunettes (14) ; **caractérisé en ce que** l'arrangement (10) possède un élément de maintien (36) disposé sur le premier côté du support (72) pour le verre de lunettes (14) destiné à accueillir de manière amovible un appareil mobile (32) doté d'un dispositif d'enregistrement d'images (48) et d'un dispositif d'affichage d'images (50), notamment un Smartphone ou une tablette, et une source de lumière (46) de l'appareil mobile (32) en tant que faisceau de rayons lumineux d'éclairage (22) est couplée à l'arrangement (10),
l'arrangement (10) possédant une liaison par câble avec l'appareil mobile (32) afin d'alimenter l'arrangement (10) avec une tension électrique depuis l'appareil mobile (32), la tension électrique de l'appareil mobile (32) étant utilisée pour un fonctionnement d'un moteur électrique en vue de rendre possible un mouvement du réflecteur (26) réalisé sous la forme d'un rétroréflecteur (24),
une fréquence d'un mouvement périodique du réflecteur (26) réalisé sous la forme d'un rétroréflecteur (24) étant adaptée à un signal de synchronisation de l'arrangement de visualisation (30).

4. Procédé mis en œuvre par ordinateur pour commander l'arrangement (10) selon la revendication 1, **caractérisé par** les étapes de réception du faisceau de rayons lumineux d'observation (28) en provenance du verre de lunettes avec le dispositif d'enregistrement d'images (48) de l'appareil mobile (32) et de représentation visuelle du signe de marquage (12) avec le dispositif d'affichage d'images (50) de l'appareil mobile (32).

5. Procédé mis en œuvre par ordinateur selon la revendication 4, le procédé comprenant en outre le réglage d'un écart entre un objectif (40) et l'appareil mobile (32), l'objectif (40) étant disposé avec au moins un élément optique réfractif, diffractif et/ou réfléchissant dans un trajet de rayon du faisceau de rayons lumineux d'observation (28).

6. Procédé mis en œuvre par ordinateur selon la revendication 4 ou 5, le procédé comprenant en outre la représentation visuelle d'une zone (44) du verre de lunettes (14) qui présente le signe de marquage (12) et/ou l'interprétation du signe de marquage (12).

7. Procédé pour rendre visible un signe de marquage (12) d'un verre de lunettes (14), comprenant les étapes suivantes
- guidage (84) d'un faisceau de rayons lumineux d'éclairage (22) à travers le verre de lunettes (14), la lumière solaire étant injectée en tant que faisceau de rayons lumineux d'éclairage (22) dans l'arrangement (10) selon l'une des revendications 1 et 2 ;
- réflexion (86) du faisceau de rayons lumineux d'éclairage (22) sous la forme d'un faisceau de rayons lumineux d'observation (28) sur un réflecteur (26) réalisé sous la forme d'un rétroréflecteur (24) ;
- guidage (88) du faisceau de rayons lumineux d'observation (28) à travers le verre de lunettes (14) ;
- guidage (90) du faisceau de rayons lumineux d'observation (28) qui est passé à travers le verre de lunettes (14) sur un arrangement de visualisation (30) ; et
- réception (92) et représentation visuelle (94) du faisceau de rayons lumineux d'observation (28) en provenance du verre de lunettes (14) par l'arrangement de visualisation (30),
l'arrangement (10) possédant une liaison par câble avec l'appareil mobile (32) afin d'alimenter l'arrangement (10) avec une tension électrique depuis l'appareil mobile (32), la tension électrique de l'appareil mobile (32) étant utilisée pour un fonctionnement d'un moteur électrique en vue de rendre possible un mouvement du réflecteur (26) réalisé sous la forme d'un rétroréflecteur (24),
une fréquence d'un mouvement périodique du réflecteur (26) réalisé sous la forme d'un rétroréflecteur (24) étant adaptée à un signal de synchronisation de l'arrangement de visualisation (30).

8. Procédé pour rendre visible un signe de marquage (12) d'un verre de lunettes (14), comprenant les étapes suivantes
- guidage (84) d'un faisceau de rayons lumineux d'éclairage (22) à travers le verre de lunettes (14), la lumière d'une source de lumière (46) d'un appareil mobile (32) étant injectée en tant que faisceau de rayons lumineux d'éclairage (22) dans l'arrangement (10) selon la revendication 3 ;
- réflexion (86) du faisceau de rayons lumineux d'éclairage (22) sous la forme d'un faisceau de rayons lumineux d'observation (28) sur un réflecteur (26) réalisé sous la forme d'un rétroréflecteur (24) ;
- guidage (88) du faisceau de rayons lumineux d'observation (28) à travers le verre de lunettes (14) ;
- guidage (90) du faisceau de rayons lumineux d'observation (28) qui est passé à travers le verre de lunettes (14) sur un arrangement de visualisation (30) ; et
- réception (92) et représentation visuelle (94) du faisceau de rayons lumineux d'observation (28) en provenance du verre de lunettes (14) par l'arrangement de visualisation (30),
l'arrangement (10) possédant une liaison par câble avec l'appareil mobile (32) afin d'alimenter l'arrangement (10) avec une tension électrique depuis l'appareil mobile (32), la tension électrique de l'appareil mobile (32) étant utilisée pour un fonctionnement d'un moteur électrique en vue de rendre possible un mouvement du réflecteur (26) réalisé sous la forme d'un rétroréflecteur (24),
une fréquence d'un mouvement périodique du réflecteur (26) réalisé sous la forme d'un rétroréflecteur (24) étant adaptée à un signal de synchronisation de l'arrangement de visualisation (30).

9. Procédé selon la revendication 7 ou 8, un premier écart (Al) entre l'arrangement de visualisation (30) et le verre de lunettes (14) et/ou un deuxième écart (A2) entre le réflecteur (26) réalisé sous la forme d'un rétroréflecteur (24) et le verre de lunettes (14) étant réglé.

10. Utilisation d'un appareil mobile (32) doté d'un dispositif d'enregistrement d'images (48) et d'un dispositif d'affichage d'images (50), notamment d'un Smartphone ou d'une tablette pour capter, représenter visuellement et/ou interpréter un faisceau de rayons lumineux d'observation (28) de l'arrangement (10) selon l'une des revendications 1 à 5, pour rendre visible un signe de marquage (12) d'un verre de lunettes (14), l'appareil mobile (32) étant disposé de manière amovible dans un élément de maintien (36), l'arrangement (10) possédant une liaison par câble avec l'appareil mobile (32) afin d'alimenter l'arrangement (10) avec une tension électrique depuis l'appareil mobile (32), la tension électrique de l'appareil mobile (32) étant utilisée pour un fonctionnement d'un moteur électrique en vue de rendre possible un mouvement du réflecteur (26) réalisé sous la forme d'un rétroréflecteur (24),
une fréquence d'un mouvement périodique du réflecteur (26) réalisé sous la forme d'un rétroréflecteur (24) étant adaptée à un signal de synchronisation de l'arrangement de visualisation (30).

11. Utilisation selon la revendication 10, l'unité de calcul de l'appareil mobile étant utilisée pour l'interprétation et/ou le décodage des informations mémorisées dans le signe de marquage.
